# EUROPEAN PATENT SPECIFICATION

(11) **EP 4 762 748 B1**
(45) Date of publication and mention of the grant of the patent: **23.09.2026**
(21) Application number: 24802217.0
(22) Date of filing: 06.11.2024
(51) Int. Cl.: H04L 43/10, G06F 9/54, G06F 9/48, G06F 9/50, H04L 67/1029

(54) **A METHOD FOR HANDLING ECHO REQUESTS/RESPONSES AT A NETWORK ELEMENT**
VERFAHREN ZUR HANDHABUNG VON ECHOANFRAGEN/-ANTWORTEN AUF EINEM NETZWERKELEMENT
PROCÉDÉ DE GESTION DE REQUÊTES/RÉPONSES D'ÉCHO AU NIVEAU D'UN ÉLÉMENT DE RÉSEAU

(43) Date of publication of application: 24.06.2026
(73) Proprietor: 1NCE GmbH, 50670 Cologne (DE)
(72) Inventor: POPENS, Valdis Emils, 1009 Riga (LV)
(74) Representative: Eisenführ Speiser
(86) International application number: PCT/EP2024/081367
(87) International publication number: WO 2026/098773

(56) References cited:
- EP-B1- 0 777 357
- WO-A1-2023/046291

## Description

### Field of the invention

The present invention relates to a method for handling echo requests/responses at a network element and a method for handling echo requests/responses by an echo manager of a plurality of echo managers.

The present invention also relates to a computer-readable storage medium storing program code, the program code comprising instructions for carrying out such a method.

### Technological Background

Devices on the internet conventionally or network elements of a telecommunication network such as, for example GPRS Support Nodes (GSNs), Radio Network Controllers (RNCs), GTP nodes, send each other echo requests to have up to date information about their peer connectivity, e.g. if a device is reachable over the network. The 3GPP specification TS29.060, clause 7.2.1 states that echo request messages shall not be sent more often than every 60 seconds on each path. Shorter intervals for sending echo requests are allowed in case no echo response is received. In this case, the request can be retried earlier.

EP 0 777 357 B1 (NCR INT INC [US]) 13 July 2005, deals with monitoring (polling) nodes in a network. A network management station polls the nodes. The algorithm, at the station, has the target to optimize the speed of the node (status) discovery by not overloading the network with polls. The station has a database of unacknowledged echo requests. The station puts the echo requests in a queue.

WO 2023/046291 A1 (ERICSSON TELEFON AB L M [SE]) 30 March 2023, deals with addressing scalability issues when pinging many GTP nodes.

### Description of the invention

The conventional procedures for path management are based on a direct interaction between two peers where each initiator peer keeps track of the timing and frequency of echo request/response messages. Any attempt to scale up the standard solution would require an increased coordination effort and an increased signalling and overhead.

Achieving a highly scalable system starting from the existing architecture requires to overcome technical hurdles intrinsic to the architecture itself. This is because an architecture including a pool of conventional GTP initiator instances, each tracking its own echo requests/responses is by nature not scalable. Therefore, to make it scalable, synchronization algorithms would be required to coordinate communication between all the GTP initiator instances to avoid duplication of requests. This solution comes at a cost because it would considerably increase signalling across the peers, thus increasing overhead.

The present disclosure improves the existing technology by providing an architecture that can be easily scaled up and down without the necessity of internal synching algorithms and of additional signalling for coordinating the GTP initiator instances in the pool.

A first aspect of the invention provides a method for handling echo requests/responses at a network element, wherein the method comprises performing, by a first echo manager of a plurality of echo managers:
receiving a process event message from a queue processor, wherein the process event message indicates a peer to be processed,
in response to receiving the process event message from the queue processor, retrieving from a database peer information including a reachability status indicator of the peer indicated in the process event message,
based on the retrieved peer information determining (a) whether an echo request is to be sent to the peer indicated in the process event message, and (b) a time interval after which a next process event message is to be sent to the peer, and
generating an event notification indicating the determined time interval and the associated peer, and sending the generated event notification to the queue processor;
wherein the method further comprises performing, by the queue processor:
   updating a processing queue with an entry including the time interval and associated peer indicated in the event notification received from the first echo manager, wherein the processing queue is configured to comprise entries including time interval and associated peer indicated in event notifications received from one or more echo managers of the plurality of echo managers; and
   sending a process event message to a selected echo manager, wherein the process event message indicates a peer to which an echo request is to be sent next, said peer being identified by the queue processor based on a time interval associated with the peer as stored in the queue entry.

In accordance with the first method the processing queue may be stored in a processing queue database. The splitting of the functionality of tracking and handling timers to a queue processor will allow to have a single point of truth for all the EMs. Multiple EMs can then use this single point of truth for sending echo requests. The described mechanism allows for horizontal scaling and increases the resilience of the architecture. In particular, the queue processor is responsible for deciding when an echo request shall be sent and accordingly instructs one available echo manager to send the respective echo requests. The echo managers accordingly send and receive the echo requests; however, the queue processor governs when and by which echo manager an echo request shall be sent. This architecture provides a central point of truth avoiding echo requests from different echo managers.

In a first implementation of the method according to the first aspect, the method further comprises in response to receiving an echo response from a peer, updating in the database, by an echo manager of the plurality of echo managers, peer information relative to the peer, wherein updating the peer information includes setting the reachability status indicator to indicate that the network function received an echo response from the peer.

The database is accessible and therefore maintained by all echo managers. Thus, all echo managers have access to the same reachability status indicator of the peers. The database is updated upon an echo request manager sending (or not sending) or receiving (or not receiving) an echo response. Thus, any change of the reachability status that indicates whether a peer has sent an echo request in response to an echo response is stored in the database.

In the first implementation the echo response from the peer may be received by a load balancer and forwarded by the load balancer to an echo manager of the plurality of echo managers. The load balancer may select the echo manager to which the echo response is forwarded based on an algorithm, for example a round-robin algorithm.

In a further implementation of the method according to the first aspect, the method further comprises, in case the first echo manager determines from the retrieved peer information that the peer sent an echo response message, updating in the database, by the first echo manager of the plurality of echo managers, peer information relative to a peer, wherein updating the peer information includes resetting the reachability status indicator.

The resetting of the peer information simplifies the procedure, since after receipt of the echo request and expiration of the accordingly set time delay a new echo request shall be sent. Therefore, after the expiration of the time delay set after an echo request has been received a new echo request is sent in any case. Therefore, the peer information may be reset and the procedure starts from the beginning.

In a further implementation of the method according to the first aspect, the method further comprises in response to receiving the event notification or a clean-up instruction from the first echo manager, deleting from the processing queue, by the queue processor, previous notifications relating to the peer and received by the queue processor from any echo manager of the plurality of echo managers.

The processing queue stores information on the peers, in particular a time delay after expiry of which the associated peer shall be processed. The event notifications inform the queue processor about the peers to be processed and on the respective time delays after which the peers shall be processed. Old queue element can be deleted from the queue. Thus, the queue reflects the current information on each peer.

In a further implementation of the method according to the first aspect, the method may comprise starting a timer upon receipt of the time delay indicated by the event notification. The time for the timer to expire may correspond to the indicated time delay. The method comprises, upon expiration of the time, by the queue processor sending a process event message that the associated peer shall be processed. Alternatively, upon receipt of the event notification, the method comprises, by the queue processor, calculating a future time at which the process event message that the associated peer shall be processed is to be send by adding the time delay to a local time at the queue processor. If the local time corresponds to the calculated future time, the process event message is sent by the queue processor.

In a further implementation of the method according to the first aspect, the method further comprises performing, by the first echo manger:
in case the peer information indicates that the peer has not sent an echo response, sending an echo request to the peer indicated in the process event message, and a notification to the queue processor indicating a short time interval related to the peer; or in case the peer information indicates that the peer has sent an echo response, sending a notification to the queue processor indicating a long time interval related to the peer and resetting in the database the peer information with respect to the peer.

The echo manager in this case selects the long time interval in case the peer has responded and accordingly is alive. In case the peer has not responded a short time interval is selected in order to quickly determine whether the peer is alive. The process differentiates between peers that have send a response and peers which have not sent a response. Thus, only not responding peers are processed repeatedly at short intervals and responding peers are queried in longer intervals. The method therefore avoids unnecessary querying of alive peers

In a further implementation of the method according to the first aspect, the method further comprises:
subsequent to sending an event notification to the queue processor, sending to the queue processor, by the first echo manager, a polling request to receive a new process event message.

By sending a polling request the echo manager indicates that it is idle. In other words, after performing the task of sending an echo request or updating the database and sending a respective event notification to the queue processor, the echo manager informs the queue processor that it is available once more.

In a further implementation of the method according to the first aspect, the method further comprises in response to the polling request, updating, by the queue processor, a queue of echo managers, EM-queue, with a queue element corresponding to the echo manager sending the polling message. The echo manager queue may be stored in a respective database.

The queue processor may update the echo manger queue, for example, in a first-in-first-out manner, i.e. the echo manager that has sent the latest polling request is the last element, the last element being the element to be processed last in the queue. The echo manager that corresponds to the first element of the queue is the echo manager which polling request is the oldest with respect to the time at which each echo manager has sent the poll. Updating the queue of echo managers by the queue processor may include deleting the first queue element upon sending a process event message to the corresponding echo manager. Subsequently the queue elements are shifted one element towards the beginning of the queue.

For example, the queue processor may further comprise a database handler which in response to a polling message updates the echo manager queue stored in the echo manager queue database with a queue element corresponding to the echo manager sending the polling message; and wherein the echo or event notification/poll receiver is adapted to receive a notification from an echo manager indicating a short or long time interval with respect to a peer, and wherein the queue processor comprises a processing event generator starting a timer with respect to a peer corresponding to the short or long time interval.

In a further implementation of the method according to the first aspect, the processing event message is sent to the echo manager that corresponds to the next element in the queue of echo requests.

In a further implementation of the method according to the first aspect, the reachability status indicator in the peer information is an echo response flag.

In a further implementation of the method according to the first aspect, the echo response flag includes an echo response counter, the method further comprising, in case the peer has sent an echo response message, updating, by the first echo manager, the peer information with respect to the peer by increasing the response counter by one or by setting the response counter to 1.

Using a flag to indicate the reachability is a simple measure that saves resources and which is easy to process. Using counters indicating how many times a peer has responded and how many times an echo request has been sent to the peer allows to easily determine whether a further echo request shall be sent, and which time delay shall be set. For example, in case the echo response counter is one, the short time interval is selected, and no echo request is sent. Updating the peer information amounts to increasing the respective counter in accordance with whether a request has been sent or a response has been received.

In a further implementation of the method according to the first aspect, the method further comprises selecting an echo manager to which a processing event is sent based on the stored queue of echo managers, wherein the queue is based on the order of the polling requests received by the queue processor, in particular wherein the selecting is a First in First Out, FIFO, based selection or a First Come First Served, FCFS, based selection.

In a further implementation of the method according to the first aspect, further including, after sending the process event message to the echo manager, flagging, by the queue processor, the entry of the queue relating to the peer indicated in the process event message as 'do not send' to avoid duplicated process event messages, and removing, by the queue processor, the entry in response to receiving an event notification or a clean-up instruction from the echo manager.

The flagging of the entry allows to maintain the entry until an acknowledgement that the process event message has been received by the echo manager is received by the queue processor. Thereby allowing to re-send the process event message in case no acknowledgement is received by the queue processor. Further, duplication is avoided as the entry is flagged. Contrary to simply maintaining the entry, which could lead to reprocessing of the entry and subsequent duplication of the process event message, this flag ensures that the process event message is not unnecessarily sent for a second time. The queue processor may interpret an event notification as acknowledgement that the process event message with respect to a peer has been received and subsequently delete the entry with respect to that peer from the list.

A second aspect relates to a method for handling echo requests/responses by an echo manager of a plurality of echo managers, the plurality of echo managers con-figured to be implemented in a network element, the method comprising:
receiving a process event message from a queue processor, wherein the process event message indicates a peer to be processed;
in response to receiving the process event message from the queue processor, retrieving from a database peer information including a reachability status indicator of the peer indicated in the process event message, the peer information being stored in the database and provided to an echo manager of the plurality of echo managers; based on the retrieved peer information determining (a) whether an echo request is to be sent to the peer indicated in the process event message, and (b) a time interval after which a next process event message which indicates the peer is to be sent; and generating an event notification indicating the determined time interval and the associated peer and sending the generated event notification to the queue processor.

The implementations of the method according to the first aspect and describing the features of the echo manager are as well possible implementations of the method according to the second aspect. Accordingly features of the echo manager described in the implementations of the first aspect can be combined with the features of the echo manager according to the second aspect.

A third aspect relates to a method for handling echo requests/responses by a queue processor
configured to be implemented in a network element, the method comprising:
receiving an event notification from an echo manager of a plurality of echo managers, the event notification indicating a peer, and the event notification indicating a determined time interval after which a next process event message which indicates the peer is to be sent;
updating a processing queue with an entry including the time interval and the associated peer indicated in the received event notification, wherein the processing queue is configured to comprise entries including time interval and associated peer indicated in event notifications received from one or more echo managers of the plurality of echo managers; selecting an echo manager from the plurality of echo managers to which a process event message is to be sent next, wherein the selected echo manager corresponds to the next element in a queue of echo managers; and sending a process event message to the selected echo manager, wherein the process event message indicates a peer to be processed, said peer being identified by the queue processor based on a time interval associated with the peer as stored in the processing queue entry.

The implementations of the method according to the first aspect and describing the features of the queue processor are as well possible implementations of the method according to the third aspect. Accordingly features of the queue processor described in the implementations of the first aspect can be combined with the features of the method according to the third aspect.

A fourth aspect relates to an echo manager for handling echo requests/responses, the echo manager configured to be implemented in a network element, wherein the echo manager is configured to: receive a process event message from a queue processor, wherein the process event message indicates a peer to be processed; in response to receiving the process event message from the queue processor, retrieve from a database peer information including a reachability status indicator of the peer indicated in the process event message, the peer information being stored in the database and provided to an echo manager of the plurality of echo managers; based on the retrieved peer information determine (a) whether an echo request is to be sent to the peer indicated in the process event message, and (b) a time interval after which a next process event message which indicates the peer is to be sent; and generate an event notification indicating the determined time interval and the associated peer and sending the generated event notification to the queue processor.

In a further implementation of the echo manager of the fourth aspect, the echo manager is configured to update, in response to receiving an echo response from a peer, in the database peer information relating to the peer, wherein updating the peer information includes resetting the reachability status indicator.

In a further implementation of the echo manager of the fourth aspect, the echo manager is configured to update, in case the echo manager determines from the retrieved peer information that the peer sent an echo response message, in the database, peer information relative to the peer, wherein updating the peer information includes resetting the reachability status indicator.

In a further implementation of the echo manager of the fourth aspect, the echo manager is configured, in case the peer information indicates that the peer has not sent an echo response, to send an echo request to the peer indicated in the process event message, and an event notification to the queue processor indicating a short time interval related to the peer; or in case the peer information indicates that the peer has sent an echo response, to send a notification to the queue processor indicating a long time interval related to the peer and to reset in the database the peer information with respect to the peer .

In a further implementation of the echo manager of the fourth aspect, the echo manager is configured to send, subsequent to sending a notification to the queue processor, a polling request to indicate availability to receive a new process event message from the queue processor.

In a further implementation of the echo manager of the fourth aspect, the reachability status indicator in the peer information is an echo response flag.

In a further implementation of the echo manager of the fourth aspect, the echo response flag includes an echo response counter, wherein the echo manager is further configured to update, in case the peer has sent an echo response message, updating, the peer information with respect to the peer by increasing the response counter by one or by setting the echo response counter to 1.

The echo manager according to the fourth aspect may include at least one processor and at least one memory storing instructions that, when executed by the at least one processor, causes the echo manager at least to perform the steps and functions of the fourth aspect.

A fifth aspect relates to a queue processor for handling echo requests/responses configured to be implemented in a network element, the method comprising: receiving an event notification from an echo manager of a plurality of echo managers, the event notification indicating a peer, and the event notification indicating a determined time interval after which a next process event message which indicates the peer is to be sent; updating a processing queue with an entry including the time interval and the associated peer indicated in the received event notification, wherein the processing queue is configured to comprise entries including time interval and associated peer indicated in event notifications received from one or more echo managers of the plurality of echo managers; selecting an echo manager from the plurality of echo managers to which a process event message is to be sent next, wherein the selected echo manager corresponds to the next element in a queue of echo managers; and sending a process event message to the selected echo manager, wherein the process event message indicates a peer to be processed, said peer being identified by the queue processor based on a time interval associated with the peer as stored in the processing queue entry.

In a further implementation of the fifth aspect, the queue processor is configured to delete, in response to receiving the event notification from the first echo manager, from the processing queue previous notifications relating to the peer and received by the queue processor from any echo manager of the plurality of echo managers.

In a further implementation of the fifth aspect, the queue processor is configured to update, in response to the polling request, a queue of echo managers, EM-queue, with a queue element corresponding to the echo manager sending the polling message. For example, the queue processor is configured to update the echo manager queue by appending a queue element corresponding to the echo manager polling the que processor to the queue of echo managers.

In a further implementation of the fifth aspect, the process event message is sent to the echo manager that corresponds to the next element in the queue of echo managers.

In a further implementation of the fifth aspect, the queue processor is configured to select an echo manager to which a process event message is sent based on a queue of echo managers based on the order of polling requests received by the queue processor, in particular wherein the selecting is a First in First Out, FIFO, based selection or a First Come First Served, FCFS, based selection. For example, the queue processor selects the echo manager corresponding to the oldest element of the queue, i.e. the element that has been written to the queue prior to any other of the present queue elements.

In a further implementation of the fifth aspect, the queue processor is configured, after sending the process event message to the echo manager, to flag the entry of the queue relating to the peer indicated in the process event message as 'do not send' to avoid duplicated process event messages, and removing, by the queue processor, the entry in response to receiving an event notification or a clean-up instruction from the echo manager.

The queue processor according to the fifth aspect may include at least one processor and at least one memory storing instructions that, when executed by the at least one processor, causes the queue processor at least to perform the steps and functions of the fifth aspect.

A sixth aspects relates to a network device comprising a first echo manager of a plurality of echo managers, configured to receive, from a queue processor, a process event message indicating a peer to be processed, the first echo manager being further configured to: in response to receiving the process event message from the queue processor, retrieve from a database peer information relating the peer indicated in the process event message; based on the retrieved peer information determining (a) whether an echo request is to be sent to the peer indicated in the process event message, and (b) a time interval after which a next process event message which indicates the peer is to be sent; and generating an event notification indicating the determined time interval and the associated peer, and sending the generated event notification to a queue processor; wherein the network device further comprises a queue processor configured to: update a processing queue with an entry including the time interval and associated peer indicated in the event notification received from the first echo manager, wherein the processing queue is configured to comprise entries including time interval and associated peer indicated in event notifications received from one or more echo managers of the plurality of echo managers; and send, upon expiry of the time interval indicated by the processing queue associated with a peer, a processing event message to an echo manager that corresponds to the next element in a queue of echo managers, wherein the processing event message indicates the peer associated with the time interval which is to be processed next, said peer being identified by the queue processor based on a time interval associated with the peer as stored in the queue entry.

The network device according to the sixth aspect may include at least one processor and at least one memory storing instructions that, when executed by the at least one processor, causes the network device at least to perform the steps and functions of the sixth aspect.

In a further implementation of the network device of the sixth aspect, the network device is a network function, for example an S-GW, P-GW, GTP-Proxy, User-plane function or a session management function.

In a further implementation of the network device of the sixth aspect, the network device, the queue processor further comprises an echo manager selector that selects an echo manager to which the next process event message is sent based on a queue of echo managers stored in a database.

A further aspect of the invention refers to a computer-readable storage medium storing program code, the program code comprising instructions that when executed by a processor carry out the method of the second aspect or one of the implementations of the second aspect.

### Brief Description of the Drawings

Exemplary embodiments of the present disclosure are illustrated in the drawings and are explained in more detail in the following description. In the figures, the same or similar elements are referenced with the same or similar reference signs. It shows:
Fig. 1 is a block diagram illustrating the echo request/response procedure between a GTP initiator and a GTP responder,
Fig. 2 is a block diagram illustrating a method in accordance with an embodiment of the present invention,
Fig. 3 illustrates a block diagram of a queue processor communicating the echo managers and a database,
Fig. 4 illustrates a diagram of a method in accordance with a queue processor,
Fig. 5 illustrates a block diagram of an echo manager,
Fig. 6 illustrates a diagram of a method in accordance with a queue processor,
Fig. 7 illustrates a diagram of echo manger internal logic,
Fig. 8 illustrates the interplay between queue processor and echo manager,
Fig. 9 is a flow diagram in accordance with the present disclosure,
Fig. 10 is a block diagram of a network function in accordance with the present disclosure.

### Detailed description

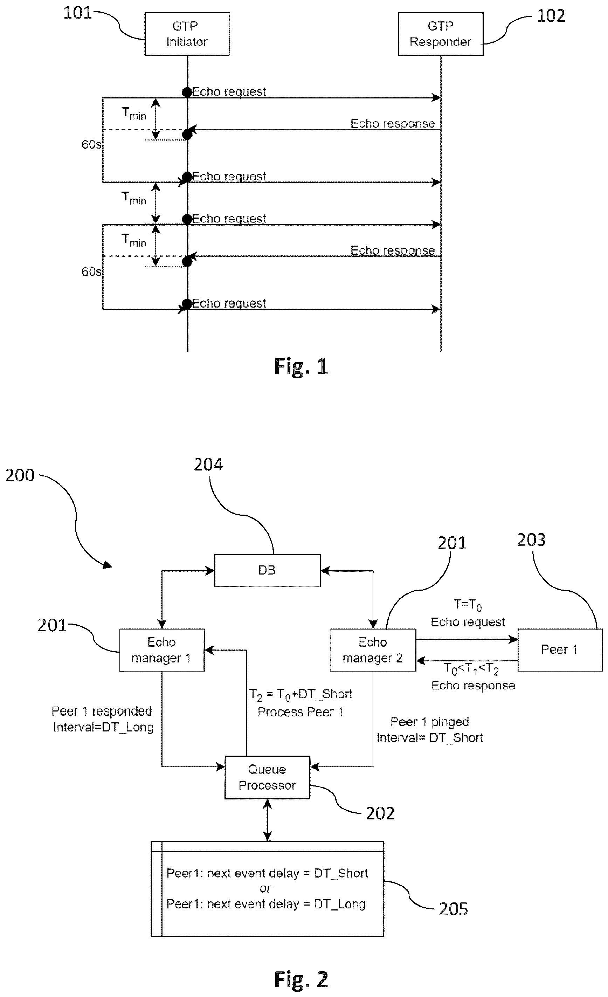

Figure 1 shows an example of a typical path management procedure according to the provisions of TS 29.060. The two vertical lines correspond to a GTP initiator 101 and a GTP responder 102. Arrows between the lines indicate interactions. Time is understood as running from top to bottom, i.e. a first interactions illustrated above a second interaction indicates that the first interaction takes place before the second interaction. The time intervals are not depicted according to scale. In Fig. 1, the GTP initiator 101 (e.g., a P-GW) sends an echo request to the GTP responder 102 or peer 102 (e.g., S-GW). The timing of echo request/response messages is tracked by the GTP initiator 101. The GTP initiator 101 sends a first echo request. If the GTP initiator 101 receives an echo response within a predefined interval (Tₘᵢₙ), it will send the next echo request not before expiration of a 60 second time interval (topmost interactions in the chart). If the GTP initiator 101 does not receive any response within the interval Tₘᵢₙ, it will send a new echo request even before expiration of the 60 second time interval (interactions in the middle of the chart). In Fig. 1, the next echo request is sent after the same time interval Tₘᵢₙ, when no echo response has been received in the meantime. If subsequently an echo response is received within the interval Tₘᵢₙ, the next echo request is again not sent before an expiration of 60 seconds from the last echo request. This is the case in the final interactions shown at the bottom of Fig. 1.

Fig. 2 shows the general idea of the invention to improve existing technology by providing an architecture that can be easily scaled up and down without the need of internal synching algorithms and of additional signalling for coordinating the GTP initiator 200 instances in the pool. In order to achieve this goal, the functionality of handling echo request/response messages is executed by one or more echo managers 201 in cooperation with a queue processor 202. More precisely, a queue processor 202 is introduced that is provided in addition to the echo managers 201 sending and receiving echo messages to and from the peers 203. Multiple echo managers 201 can be implemented as instances in a network function or GTP initiator 200, for example a packet gateway.

The queue processor 202 keeps track of and handles timers of outgoing echo requests sent by any echo manager 201 in the pool. It selects an echo manager 201 from the pool of echo managers 201 and instructs the selected echo manager 201 (EM) to process data related to a particular peer 203. The processing determines whether it is time to send the next echo request depending on whether the echo manger 201 has received an echo response from the peer 203.

Upon receiving an instruction to process a specific peer 203 (process event message 213) from the queue processor 202, a selected echo manager 201 retrieves (S2) from an external database 204 peer information relating to the peer 203 to be processed and, based on the peer status (set asynchronously by any EM 201 in the pool), determines whether it is time to send the next echo request to the peer 203. The determination is done based on whether any of the EMs 201 in the pool received an echo response from the peer 203 to be pinged. This information is stored in an external database 204 and is accessible by any EM 201 in the pool. If no response is received at the time of the determination, a new echo request is sent. In the example of Fig. 2 an echo request is sent at time T₀. The EM 201 that sent the request then sends a notification 214 to the queue processor 202 indicating a delay time until the peer 203 is to be processed again. After sending an echo request the delay time is set to a short interval DT_Short. The same EM 201 that sent the echo request also updates the entry in the database 204 and records that an echo request has been sent.

In the example of Fig. 2, an echo response is received at a time T₁, which is before the expiry of the delay time, i.e. before T₂=T₀+DT_Short. As soon as the delay time DT_Short has expired (i.e. at time T₂), the queue processor 202 sends (S1) a process event message 213 to one of the EMs 201 in the pool. This is EM 1 in the example of Fig. 2. The EM 201 receiving the process event message 213 retrieves the data relating to the peer 203 to be processed from the database 204. In the example of Fig. 2 it is determined that an echo response has been received and thus no echo request has to be sent. Instead, the EM 201 sends a notification to the queue processor 202 that peer 1 does not have to be processed for a longer delay time of DT_Long. Furthermore, the EM 201 may reset the entry in the database 204 to an initial status. The connections between the different parts of the network element 200 and an exemplary peer 203 are schematically shown in Fig. 2.

The (external) database 204 stores peer information received from any of the EMs 201 belonging to the pool. In this way, the status of any peer 203 can be retrieved at any moment by any EM 201.

The splitting of the functionality of tracking and handling timers to a queue processor 202 will allow to have a single point of truth for all the EMs 201. Multiple EMs 201 can then use this single point of truth for sending echo requests. The presence of a single point of truth renders the use of a synchronization scheme between the echo managers unnecessary. The described mechanism allows for horizontal scaling and increases the resilience of the architecture.

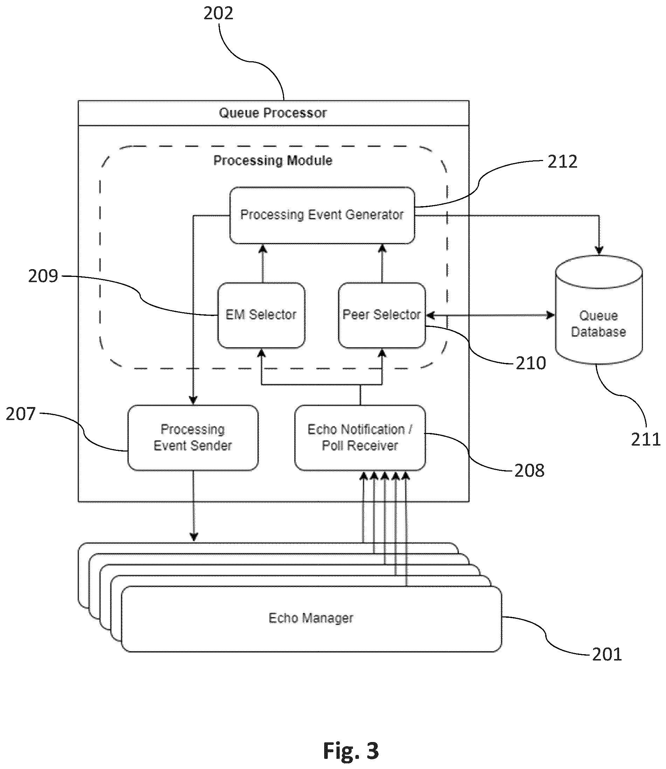

Fig. 3 illustrates the elements of the queue processor 202 in an example of a possible implementation. According to one example, the queue processor 202 comprises a processing module, interfaces to the EMs, and a queue database 211. In case the queue processor is implemented as a standalone node, the processing module may be one or more processors configured to execute a set of instructions stored in a memory (not shown). In another example, the queue processor may share the processing resources of one or more processors with the echo manager(s) and the network function or GTP initiator. The queue database 211 may be part of the queue processor 202 or implemented as a separate database 211 that can be accessed by the queue processor 202. In the present document the term database may indicate either a memory capable of storing unstructured data or a database storing an organized collection of data. The queue processor 202 is configured to send process event messages 213 to one of the EMs 201 at a time via the processing event sender 207. It is further configured to receive both echo/event notifications 214 and poll requests from any of the EMs 201 via the echo/event notification/poll receiver 208. The processing module of the queue processor 202 serves the purpose of keeping the processing queue 205 updated and generating process event messages 213. In this example, the processing module is described to comprise logical units configured to execute specific functions. In some implementations the logical units of this and of the following examples may be realized by executing, by one or more processors, instructions for carrying out the corresponding function. For this purpose, the queue processor comprises a peer selector 210 and an EM selector 209. The peer selector 210 is configured to select the next peer 203 to be processed from the processing queue 205 stored in the queue database 211. The peer selector 210 forwards an indication of a peer 203 to be processed to the processing event generator 212. The peer selector 210 also receives the echo/event notifications 214 from the echo/event notification/poll receiver 208 and updates the processing queue 205, which is stored on the queue database 211 accordingly. Like the processing module, also the echo/event notification/poll receiver 208, the processing event sender 207, the peer selector 210, the EM selector 209 may be in some example implementation logical units corresponding to functions executed by the one or more processors according to instructions stored in a memory.

The EM selector 209 serves the purpose of selecting the EM 201, which should process the next peer 203 and thus receive the next process event message 213. This may also be done via a queue-based selection. For instance, the EM selector 209 may receive the poll requests from the EMs 201 via the echo/event notification/poll receiver 208 of the queue processor 202. It may maintain an EM queue on the queue database 211 and always select the EM 201 whose poll request has been received first. The EM queue may therefore be implemented in a First-In-First-Out manner. The EM selector 209 forwards an identification of the EM 201, which should process the next peer 203, to the processing event generator 212. After a process event message has been sent to a selected EM 201, the respective EM is deleted from the queue. Accordingly, the next process event message will be sent to next EM in the queue, which is now the first EM in the queue of the queue database 211.

The processing event generator 212 combines the information on the next EM 201 to be used and the next peer 203 to be processed to generate a process event message 213. The queue processor 202 can then transmit the process event message 213 to the selected EM 201 via the processing event sender 207 as soon as the time for this message to be sent has expired. The processing event generator 212 may also update the processing queue 205 on the queue database 211 accordingly, by either deleting the entry for the respective peer 203 or by updating it with an identification that the process event message 213 has been sent.

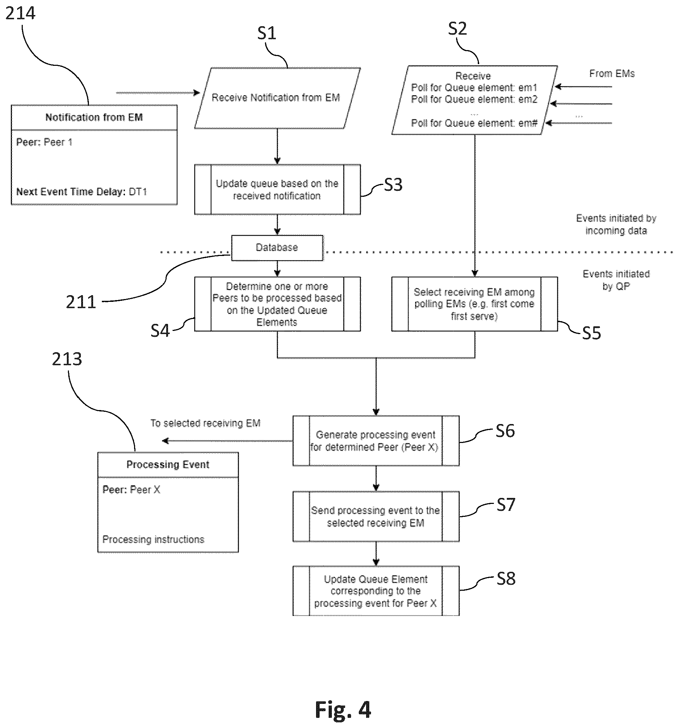

The method performed by the queue processor 202 is also illustrated in Fig. 4. The figure is split into two parts by a dashed horizontal line. Any steps performed by the queue processor 202 in response to incoming data (either event notifications 214 or polling requests) are shown above the dashed line. The steps below the dashed line are initiated by the queue processor 202 itself, i.e. by an event that is due in the processing queue 205.

On the top left of Fig. 4 the notification 214 from an EM 201 is shown. It comprises an identification of the peer 203, optionally a timestamp of the current time or the time at which the EM 201 retrieved the peer information from the database 204, and a time delay DT1 for the next event, i.e. the time duration that must expire before the next processing of this peer 203 (i.e. the time duration or interval after which the next processing of the peer 203 is due and a respective process event message is to be send). This notification 214 is received by the queue processor 202. It then proceeds to update the processing queue 205 accordingly. Updating the processing queue 205 involves accessing the queue database 211. In particular, upon receiving a notification 214 from an EM 201, the queue processor updates the queue database with the peer information and the respective time delay indicated for the peer 203.

The time delay DT1 can indicate a long time interval DT_Long or a short time interval DT_Short, for example in agreement with the indications specified by ETSI TS 29.060. Flagged elements will accordingly not be processed (by sending a process event message) until the time delay DT1 expires.

Optionally, after sending a process event message to a selected EM, the queue processor may "hide" the queue element corresponding to the received notification or mark it with a label indicating that that no process event message shall be sent to an echo manager for a predefined acknowledgement time interval or, in short, acknowledgement time (ack-time) instead of deleting the queue element immediately after sending the processing event. If the queue processor does not receive an acknowledgment message from the selected EM confirming that the EM received the process event message, within the predefined time interval the hidden entry is made available again and a new instruction is sent to the next EM available. Otherwise, if the EM responds to the instruction by sending the acknowledgement to the QP, the QP cleans the hidden entry from the queue. The acknowledgement may be for instance be an instruction from the EM to the QP to delete the queue element. Hiding of the queue element may be done by setting a new time delay corresponding to the predefined time. The predefined time may be chosen according to the system design for instance based on the EM design and the time needed by the EM to process the process event message. Possible values for the predetermined time may be 15s, or 20s, or 30s. Other values may be possible. This mechanism prevents to send the same instruction twice and allows to keep the entry relative to the peer in the memory until the EM confirms to have received the process event message.

Besides the event notifications 214, the queue processor 202 also receives poll requests from the EMs 201. A poll request indicates that the EM 201 sending the request is idle or at least able to process the next peer 203. Optionally, the queue processor 202 may maintain an EM queue on the queue database 211. If this is the case, the queue processor 202 updates this EM queue whenever a poll request is received and when a process event message 213 is sent out. These optional steps are not illustrated in Fig. 4.

The steps initiated by the processing queue 205 involve determining one more peers 203 to be processed based on the queue elements in the processing queue 205. Particularly, the queue processor 202 may determine the queue element which is next to fall due (i.e. the queue element for which the time indicated by the time delay expires first) and determine the peer 203 indicated in this queue element. Upon expiry of the time delay DT1 associated with the queue element, the queue processor processes the queue element and sends the process event message to the selected receiving EM.

The queue processor 202 may also select an EM 201 to process the next peer 203, either by referring to the EM queue or by some other method. Other methods may involve picking a random EM 201, picking the EM 201 whose poll request has been received last or selecting an EM 201 based on its identification (e.g. lowest or largest number first). The information on the determined peer 203 and the selected EM 201 are then combined to generate a process event message (also indicated in this document "processing event") 213 for the determined EM 201. The process event message 213 is illustrated in the bottom left of Fig. 4 and includes an identification of the peer 203 to be processed. The process event message 213 is sent to the selected EM 201.

After generating and sending the process event message 213, the queue processor 202 can update the processing queue 205 and in particular the queue element which initiated the sending of the process event message 213. A queue element can for instance be updated by hiding the corresponding entry or by flagging the corresponding entry as 'do not send'. The queue processor 202 may also update a queue element by hiding it or setting the flag after sending a processing event for that element to avoid that the same instruction is sent twice to different EMs. In other words, the flag is used to hide the element for the predefined acknowledgement time (ack-time) which specifies the delay of the processing of the queue element and subsequently to lifting the flag and processing the queue element, the flag may again be used to hide the element in order to avoid processing the element twice. The queue processor therefore may be configured to process any queue entry not hidden or flagged as 'do not send'. The processing queue may also be updated by deleting the queue entry with respect to the peer to which the process event message 213 relates. Accordingly, each notification may cause the queue processor 202 to generate a new queue element specifying a peer 203 and an associated time delay DT1 and during the indicated time delay the entry is hidden or not processed and after it has been processed after the expiry of the time delay, the element is deleted.

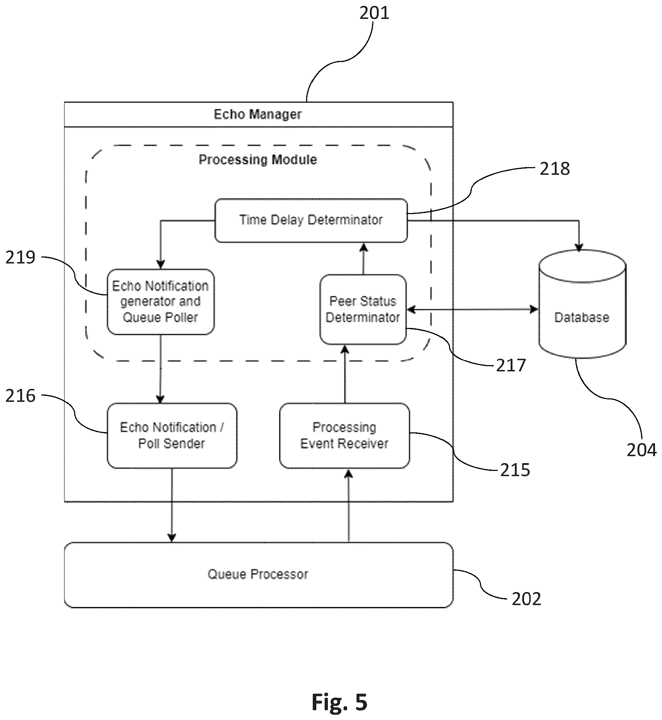

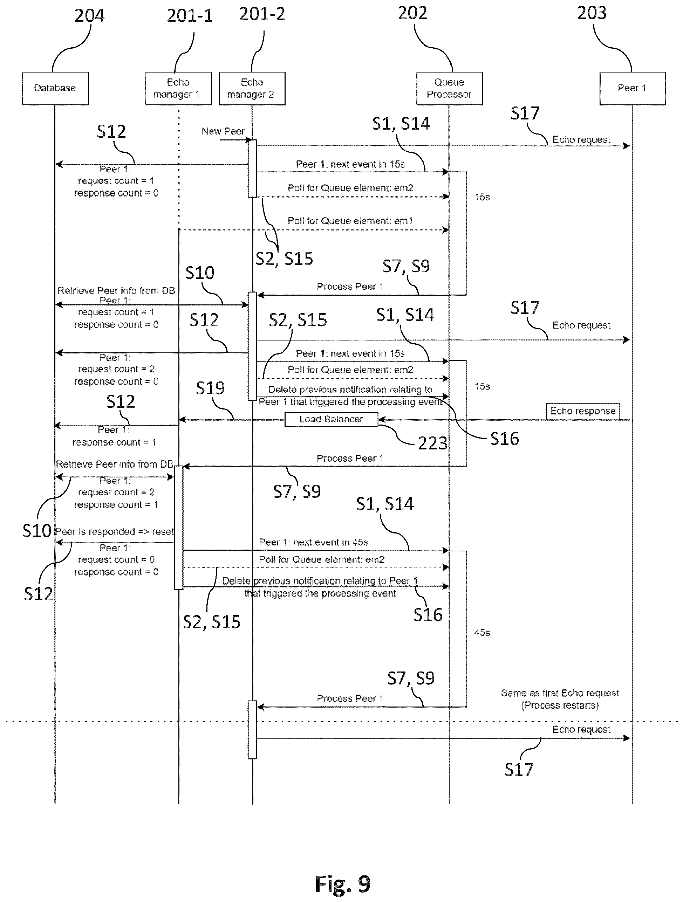

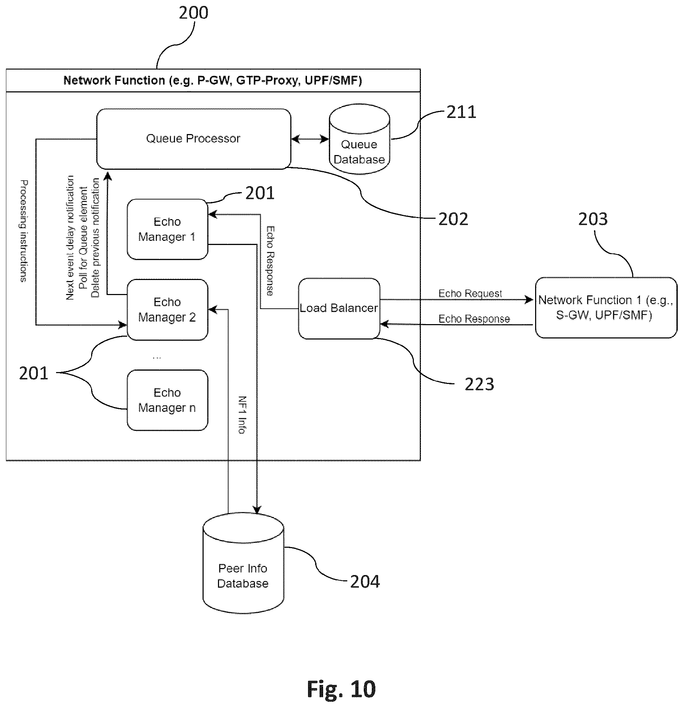

Fig. 5 illustrates elements of an EM 201. As shown in Fig. 5, the EM 201 comprises interfaces to the queue processor 202. These include an echo/event notification/poll sender 216 and a processing event receiver 215. The processing event receiver 215 is configured to receive process event messages 213 from the queue processor 202. The process event message 213 is then forwarded to the processing module of the echo manager 201. The processing module has peer status determinator 217, which can access the database 204 in which the status of each peer 203 is stored. The peer status is then forwarded to the time delay determinator 218, which decides based on the received information, when the peer 203 has to be processed again. This may for instance be after a long time interval/delay time DT_Long or after a short one DT_Short. For example, in case the information retrieved by the time delay determinator from the database indicates that the peer has sent an echo response since the last echo request, the time interval determinator determines that the time delay is the long time delay DT_Long. In case, the information retrieved by the time delay determinator from the database indicates that the peer has not sent an echo response since the last echo request, the time interval determinator determines that the time delay is the short time delay DT_Short. The EM 201 may comprise further elements and interfaces which are not shown in Fig. 5. Particularly, the EM 201 may include means for sending and receiving echo requests and echo responses for example via a load balancer 223 (cf. Figs. 9 and 10). As explained with reference to Fig. 3, also in this example the processing module is described to comprise logical units configured to execute specific function. The logical functions of this and of the following examples are realized in some implementations, by executing by one or more processors, instructions for carrying out the corresponding function. Similarly, also the echo/event notification/poll sender and the processing event receiver may be in some example implementation logical units corresponding to functions executed by the one or more processors according to instructions stored in a memory.

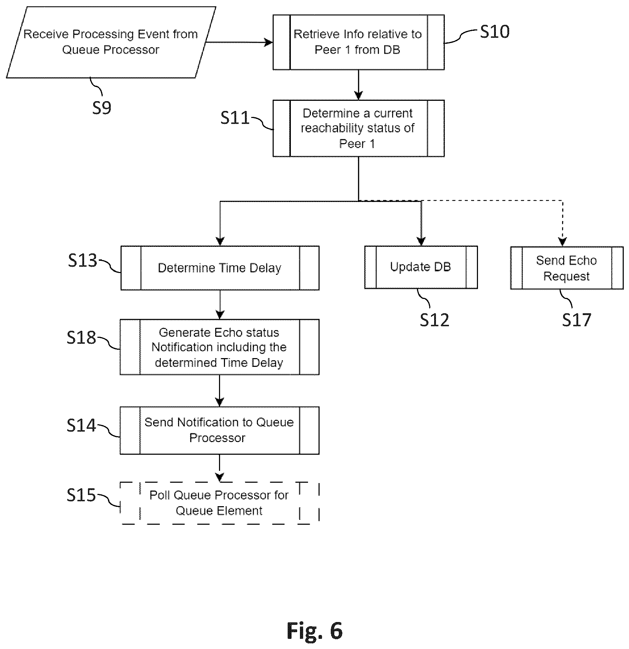

Fig. 6 is a flow chart illustrating steps performed by the EM 201. The method starts by receiving S9 a processing event from the queue processor. This means receiving the process event message 213. The process event message 213 identifies a peer 203 that shall be processed. Processing the peer includes determining whether an echo request must be sent to the peer 203. The EM 201 starts by retrieving S10 the information relating to the peer 203 indicated in the received message 213 from the database 204. In the example of Fig. 6 this is the first peer 203. From the information stored in the database 204, the EM 201 can determine S11 a current reachability status of the peer 203, i.e. whether and/or when the peer has last responded to an echo request message. The peer information stored in database 204, for example, may include a status of the peer, i.e. whether an echo request has been sent to the peer 203 and whether the peer 203 has responded to this echo request. If the echo request has been answered by the peer, no echo request has to be sent to the peer. In case the last echo request has not been answered by sending an echo response a new echo request is sent S17.

If it is determined that an echo request has to be sent to the peer 203, the EM 201 sends this echo request directly to the peer 203. An echo request is sent to the peer 203 when no echo response has been received and recorded in the database 204. The EM 201 also updates S12 the database 204 in accordance with the reachability status. The updating of the database 204 by the EM may involve storing information that an echo request has been sent to the peer 203 or it may involve resetting the request and response count to zero.

The latter is done if the determination has produced the result that the peer 203 is reachable and has recently sent an echo response, i.e. an echo response was received in response to the last echo request. The EM 201 further determines S13 a time delay until the next processing of the peer 203. The time delay may be chosen from a short time delay DT_Short and a long time delay DT_Long. The long time delay is used when it was determined that the peer 203 is reachable, i.e. an echo response was received in response to the last echo request. The short time delay is used when no echo response has been received and been recorded in the database 204. The EM 201 continues with generating S18 an echo status notification 214 that includes the determined time delay and sending S14 it to the queue processor 202. This gives the queue processor 202 the ability to update or include a queue element for the processed peer 203 that will fall due after the determined time delay has expired. Thus, a new delay time until the peer 203 should be processed again is set.

The determinations and corresponding steps taken by the EM 201 can be summarized as in the following table:

| **Request sent** | **Response received** | **Action** |
|---|---|---|
| Yes | No | - Send request |
| | | - Record request in database |
| | | - Set short delay DT_Short |
| Yes | Yes | - Reset database |
| | | - Set long delay DT_Long |
| No | - | - Send request |
| | | - Set short delay DT_Short |

Subsequently, the EM 201 may determine that it is idle again and poll S15 the queue processor 202 for another queue element that is due. This involves sending a poll request to the queue processor 202. The status of the EM may be, in an example implementation, automatically set to idle after an action, such as for instance one of the actions indicated in the above table, is executed. In this case no active determination by the EM will be made.

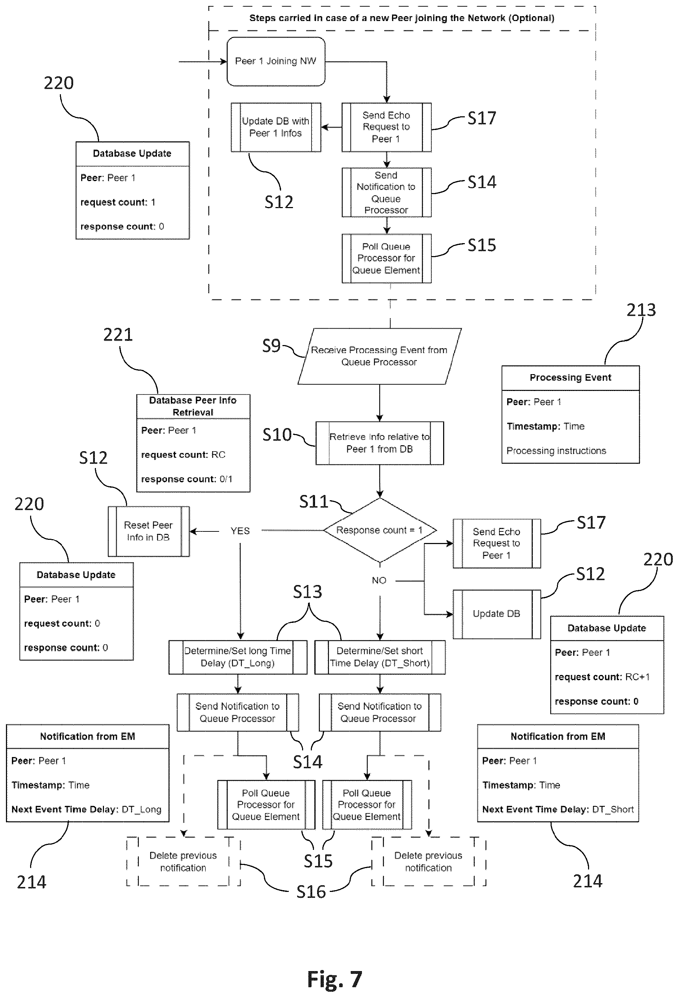

Fig. 7 also is a flow chart of a method carried out by the EMs 201. It shows some more details of the method in Fig. 6 and includes additional optional steps, which may be carried out by the EM 201. These optional steps include those carried out when a new peer 203 joins the network. In Fig. 7, the floating windows besides the flow chart show parameters or information relevant for the described actions and/or included in the described messages or notifications. For example, peer 1 may be new to the network and the EM 201 may accordingly receive an indication indicating that new peer 203 has joined. In this case, the EM 201 sends an echo request to the new peer 1 and updates the database 204 with information on peer 1. This peer information 220 comprises an identification of the peer 203, the request count, which will be one, since at this point only the initial echo request has been sent and a response count, which will be zero immediately after sending the first echo request. The EM 201 then sends a notification 214 to the queue processor 202. This notification 214 also includes an identification of the new peer 203 as well as a time delay for the next processing of this new peer 203. The initial time delay typical is the short time delay, since at this point no response to the echo request has been received. This allows the queue processor 202 to generate a queue element relating to the new peer 203, wherein the queue element indicates the peer and the respective time delay. After sending this notification 214 to the queue processor 202, the EM 201 may again poll for a queue element, i.e. send a poll request to the queue processor 202.

The lower part of Fig. 7 shows a more detailed example of the method shown in Fig. 6. The process event message 213 received by the EM 201 contains the same information as described in connection with Fig. 4 above. The EM 201 in response to receiving a process event message 213 retrieves the information relative to the peer 203 indicated in the process event message 213 from the database 204. This includes the peer identification, a request count, and a response count. The determination of the reachability status may amount to checking whether the response count is 1.

For example, if the response count is 1, it is determined that an echo response has been send by the peer 203 and, thus, the peer 203 is reachable. In this case, the peer information in the database 204 is reset to its initial values, i.e. request count and response count are both set to zero. It is also determined that the delay time is set to DT_Long, which may for instance be 45 seconds. The EM 201 sends a notification 214 to the queue processor 202 about the new delay until the next processing is due for this peer 203. This notification 214 includes an identification of the peer, a timestamp of the last processing and the time delay DT_Long until the next processing of this peer 203 is due. In this example, DT_Short may be set to 15s by an EM after sending a first echo request message to peer 1. Setting DT_Long to 45s after determining that an echo response has been sent by the peer means that the overall maximum time between the transmission of the first echo request message and transmission of a subsequent second request message will be 60s, which corresponds to the maximum time delay set in the standard. While in this example the short and long delay have been chosen to be 15s and 45 seconds respectively, other delays may be chosen depending on the design of the system. In this case the condition to be fulfilled is that the time interval between transmission of two consecutive echo request messages does not exceed 15 seconds in case no echo response message has been received and 60 seconds in case an echo request has been received. In an optional step, the EM 201 may delete previous notifications from the processing queue 205 by sending a corresponding command to the queue processor 202. As a last step, the EM 201 sends a new poll request to the queue processor 201, declaring that it is again able to process another peer 203.

In the other case, in which the response count is not 1, no echo response has been received. The peer 203 is therefore not reachable. In this case, the EM 201 sends an echo request to the peer 203 and updates the database 204 accordingly. The update of database 204 by the EM means increasing the stored request count of the peer 203 by one. The corresponding database update message 220 is shown on the right-hand side of Fig. 7. The EM 201 then determines that the short time delay should be chosen until the same peer 203 is processed again. A respective notification 214 is sent to the queue processor 202, which is the same notification as in the previous case, with the only difference that the time delay is set to DT_Short. DT_Short may for instance be 15 seconds. As in the other case, the EM 201 may delete previous notifications and send a poll request to the queue processor 202.

A result of the method in Fig. 7 is that an echo response will be sent to each peer 203 at least after every interval of length Tₘₐₓ = DT_Long + DT_Short. This may for example be 1 minute, when DT_Long is 45 seconds and DT_Short is 15 seconds. Tₘₐₓ is thus the maximal time between two echo requests to the same peer 203. Tₘₐₓ is generally used as the time between echo requests, when the peer 203 is responsive. If it is non-responsive, on the other hand, it will receive an echo request after every interval of DT_Short, e.g. every 15 seconds. This echo request repetition interval when no response is received is also denoted as Tₘᵢₙ = DT_Short, which is the minimal time after which the next echo request is sent to the same peer 203. In reality, Tₘᵢₙ and Tₘₐₓ may be slightly longer than DT_Short and DT_Long + DT_Short, respectively. This is because of processing times in the queue processor 202 and the EMs 201, which may slightly delay the actual transmission of an echo request. However, the processing times are typically much shorter than the delay times DT_Long and DT_Short, so that these processing times can be neglected for the purposes of this description. In general, the whole processing time including the transmission times is well below 1s and in some cases may be of the order of magnitude of a few milliseconds. In any case even a processing plus transmission time of about 1s would not negatively affect the functioning of the system. The processing times are nevertheless understood to be present and are illustrated (not according to scale) in Fig. 9.

In an alternative embodiment, the EM 201 may also send an echo request, when the response count has been determined to be 1 and the peer 203 is reachable, i.e. an echo request is sent every time a peer 203 is processed. In this case, an echo request may for example be sent to the peer 203 after resetting the peer information in the database 204 and the database 204 may be updated to indicate a request count of 1. When the same peer 203 is processed for the next time, it may then have responded in the meantime. This process has the advantage that a continually responsive peer 203 is only processed after intervals of length DT_Long. At the same time, the rate of echo requests to a responsive peer 203 is increased in this embodiment because an echo request is sent at least every Tₘₐₓ = DT_Long instead of DT_Long + DT_Short. This increase of the maximal echo request rate can, of course, be compensated by an appropriately long value of DT_Long.

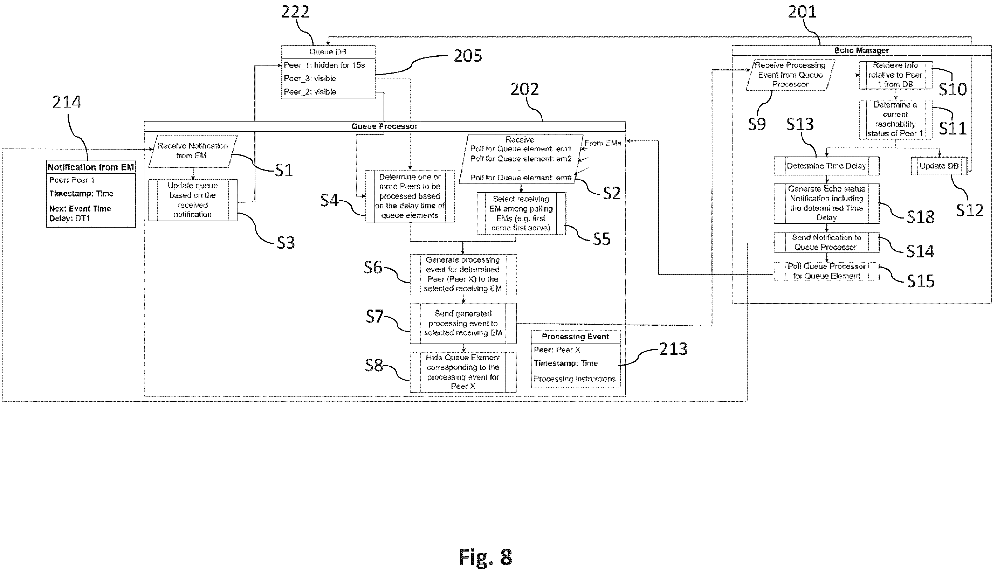

Fig. 8 is a flow chart repeating some of the steps carried out by the queue processor 202 and the echo manager (EM) 201, which are also shown in Figs. 4 and 6. The figure further illustrates the interactions between the queue processor 202 and the EM 201 and respective methods. For instance, the processing event message 213 generated by the queue processor 202 is transmitted to the EM 201 and triggers the method shown in Fig. 4. In turn, the notification 214 to the queue processor 202, which is generated by the EM 201, is sent to the queue processor 202 and triggers the step of updating the processing queue 205 stored in the queue database 211. Furthermore, the EM 201 may generate a poll request and sent it to the queue processor 202. In response to the poll request, the queue processor 202 can include the EM 201 into an EM queue and sent another process event message 213 to the EM 201, when the EM 201 has moved to the top of the EM queue.

Fig. 8 also illustrates an example of a processing queue having three entries, i.e. three queue elements. The first queue element relates to peer 1 and is hidden or not processed for 15 seconds. In this case the hiding mechanism is implemented by indicating the time delay of 15s (DT Short) in association with the queue element. That a queue element is hidden could be indicated by a flag or the entry could not be accessible for the queue processor. In accordance with the queue element being hidden, peer 1 will not be processed for another 15 seconds. The other two entries relate to peers 3 and 2 and are set to visible. Thus, the queue processor can access the queue elements and accordingly a process event message 213 will be sent to one of the EMs 201.

The different databases of the system or network element may be realized as a single database or as separate individual databases. In particular, the processing queue 205 and the peer information database 204 may be the same database or may be separate databases. In Fig. 8, it is considered that the two databases may be the same, which is illustrated by the arrow going from the "update database"-step of the EM 201 to the queue database 211.

Fig. 9 illustrates an example of interactions between the queue processor 202, two EMs 201, the database 204 storing peer information, and a peer 203. As in Fig. 1, each vertical line refers to one of the interacting elements. Each arrow between the lines indicates an interaction. Each vertically extending box on the vertical lines of the EMs 201 indicates one process performed by the EM 201. Time is understood as going from top to bottom, i.e. an interaction indicated by an arrow takes place before all other interactions illustrated below this arrow.

The process in Fig. 9 starts with Echo Manager 2 (EM2) 201-2 recognizing a new peer 203. As shown in Fig. 7, this triggers the EM2 201-2 to send an echo request to this new peer 203. EM2 201-2 then updates the database 204 accordingly, setting the request count to 1 and the response count to 0. Subsequently, a notification 214 is sent to the queue processor 202. The notification contains at least an identification of the peer 203 to which the request was sent and an indication that it is to be processed after a short time delay. The time delay is set to the short time delay, because the new peer has not sent any echo response. The short time delay DT_Short is set to 15s in this example. In accordance with the notification, the queue processor updates the processing queue 205 with the identification of the peer and the associated time interval. For example, a queue element with respect to the peer indicated by the notification is not processed for the duration of the time delay indicated by the notification or a new queue element comprising the identification of the peer and the time interval is provided and written in the queue. After sending the echo request, the EM2 201-2 sends a poll request to the queue processor 202 indicating that it is ready to perform another process. After sending the echo request, the EM is idle. After the poll request of the EM2 201-2, echo manager 1 (EM1) 201-1 may also send a poll request to the queue processor 202. Accordingly, EM1 201-1 will be - in terms of the order in which the queue elements are written into the EM queue - behind the EM2 201-1 in the EM queue of the queue processor 202.

After expiry of the short time interval of 15s (DT_Short), the queue processor 202 sends a new process event message 213 to the EM2 201-2, which is the EM of the pool of echo managers 201 next in line in the EM queue. For example, the first queue element in case the queue elements are ordered in a first in first out manner indicates the EM2 201-2 resulting in the selection of the EM2 201-2 by the queue processor. Upon receiving the process event message 213 indicating the peer 203 as the peer 203 to be processed, the EM2 201-2 retrieves information about the peer 203 from the database 204. In the example, the peer 203 has at this time not responded to the echo request. Therefore, the peer information retrieved from the database indicates an echo response count of zero. Thus, the EM2 201-2 determines that another echo request has to be sent and subsequently sends an echo request to the peer 203. The transmission of the echo request is recorded in the database 204 by EM2 201-2. For example, the echo request counter is increased by one, in the embodiment of Fig. 9, the counter accordingly is increased to 2. EM2 201-2 subsequently sends a notification to the queue processor indicating that the peer 203 has to be processed again after 15s (DT_Short). Subsequently, EM2 201-2 polls the queue processor indicating that the EM2 201-2 is available for processing. Optionally, the EM2 201-2 may instruct the queue processor to delete the previous notification (entry in the queue database) from the processing database 205 relating to the peer 203 that triggered the processing event. This instruction is interpreted by the queue processor as the acknowledgment message.

In the example of Fig. 9, subsequent to the processing event, i.e. EM2 201-2 sending an echo request, an echo response from the peer 203 is received. The echo responses are handled by a load balancer 223. The load balancer 223 selects an available echo manager. The selection may be based on an algorithm, for example round-robin or based on a list which is maintained by the load balancer. The echo response is routed by the load balancer 223 to an available EM of the pool selected according to a selection scheme, in this example the selected EM is EM1 201-1. EM1 201-1 only records the echo response in the database 204, by setting the response count of the peer 203 to 1. After expiry of the 15s interval, the queue processor 202 sends the next process event message 213. This process event message is transmitted to EM1 201-1 which respective entry has moved to the top of the EM queue when the previous process event message 213 was sent. EM1 201-1 starts the processing event by retrieving the peer information relating to the peer 203 from the database 204. EM1 201-1 determines that a response has been received. Thus, no echo request has to be sent. Instead, EM1 201-1 resets the info in the database 204 by setting both request count and response count to 0. EM1 201-1 then sends a notification 214 to the queue processor 202 indicating that the peer 203 is to be processed again after a long time delay DT_Long (in this example 45s). EM1 201-1 may then poll for another processing element by sending a poll request to the queue processor. Optionally, EM1 201 1 may also send a command to delete previous notifications relating to the peer 203 that triggered the processing event.

After the longer time delay DT_Long of 45s has expired, the queue processor 202 sends the next process event message 213. Since the last poll request of EM2 201-2 has been received before last poll request of EM1 201-1, this process event message 213 is sent to EM2 201-2 again. At this point the same process as in the top of Fig. 1 starts again.

EM2 201-2 will send an echo request to the peer 203, record the sending of the echo request in the database 204 and carry on as in the top of Fig. 9.

From Fig. 9 it can be seen that the first two echo request have been transmitted in short succession to one another after a minimal time interval Tₘᵢₙ. This is approximately equal to DT_Short (up to comparably short processing times). The second and third echo request, on the other hand, are transmitted with a separation of Tₘₐₓ, which is approximately DT_Long + DT_Short = 1 minute.

Fig. 9 illustrates an example of interactions between the different elements. In general, any number of EMs 201 and peers 203 may be involved in the system and the echo responses may be received at any time in the process.

Detection of a new Peer may occur, for instance, in response to a message sent by the new peer 203 to the EM or to a network function implementing the EM. This message may be a Create Request message, but other message types, such as Echo Request messages itself or the like, may also be used. A create Request message may be a Create PDP Context message (e.g. for the GTP-V1 protocol) or a Create Session message (e.g., for the GTP-V2 protocol). The EM will send a new Echo request message to the new peer and update the Database and send a notification to the QP based of the reaction of the new peer to the Echo Request message. Concurrently to the new peer sending a message to EM2 201-2, the QP may send to EM2 an instruction to process a different Peer (not shown in the figure). In this case EM2 201-2 will process the instructions relating to the different peer in parallel to the processing of the new peer. In some example implementations, the EMs may be multi-threaded. A multi-threaded EM may send multiple poll requests to the QP, and the QP would send events about different Peers to the multi-threaded EM. To avoid any conflict, the QP does not send to the EMs multiple messages about the same Peer.

Fig. 10 illustrates a processing element 200, which may be a network function like an S-GW, P-GW, GTP-Proxy, User-plane function (UPF) or a session management function (SMF). The processing element 200 can comprise any number of echo managers 201. The network element further comprises a queue processor 202 and a related queue database 211. The queue processor 202 is connected to the queue database 211 for retrieving queue elements and for updating the processing queue 205 or individual queue elements in the queue database 211. Each EM 201 can also interact with the queue processor 202.

This interaction may involve receiving processing instructions, i.e. process event messages 213 from the queue processor 202. Each EM 201 may, furthermore, send event delay notifications 214 as well as poll requests and optionally delete notifications to the queue processor 202. Every EM 201 has access to a peer information database 204. As illustrated in Fig. 10, the peer information database 204 may be provided separately from the network element 200. Alternatively, the peer information database 204 may be part of the network element 200. The network element 200 may further comprise a load balancer 223. The load balancer 223 is used to route traffic from outside of the network element 200 to the respective EMs 201. The routing includes routing the echo requests and echo responses, which are sent and received by the network element 200, respectively. The load balancer 223 serves the purpose of distributing the traffic load between the different EMs 201. Fig. 10 also illustrates that the peers 203 mentioned before may be or may be part of another network function like an S-GW, UPF or SMF.

In the present disclosure various illustrative components, blocks, modules, circuits, and/or algorithm steps have been described above generally in terms of their functionality. A person skilled in the art would understand that these illustrative components, logical blocks, modules, circuits, and/or algorithm steps described in connection with the examples disclosed in this document, for example particular in figures 3, 5, 9 and corresponding flow charts, may be implemented as electronic hardware, firmware, computer software, or combinations thereof depending on the particular application and design constraints imposed on the overall system. For example, for a hardware implementation, the processing units or modules may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described therein, or a combination thereof. With software, the implementation may be through modules (e.g., procedures, functions, etc.) that perform the functions described therein. The software codes may be stored in one or more memories and executed by one or more processors of a computing device. In some examples, the one or more memories and/or the one or more processors may be in a cloud server and share their resources among several network elements or units within the network elements. Additionally, the various illustrative flow diagrams, logical blocks, modules and/or algorithm steps described herein may also be coded as computer-readable instructions carried on any (non-transitory) computer-readable medium known in the art or implemented in any computer program product known in the art.

In one or more examples, the steps or functions described herein may be implemented in hardware, software, firmware, or any combination thereof. If implemented in software, the functions may be stored on or transmitted over a computer-readable medium as one or more instructions or code. Computer-readable media include both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. The term computer-readable medium also indicates any connection. For example, if the software is transmitted from a website, server, or other remote source, any means used for transmitting the software, such as a coaxial cable, fibre optic cable, twisted pair, digital subscriber line (DSL), or wireless technologies such as infrared, radio, and microwave are included in the definition of medium. The computer readable medium may be a non-transitory computer readable medium or non-transitory computer program product comprising program instructions that, when executed by one or more hardware processors, cause the hardware processor to perform the steps or functions described in this disclosure. The term non-transitory, as used herein, is a limitation of the medium itself (i.e., tangible, not a signal) as opposed to a limitation on a data storage persistency (e.g., RAN vs. ROM).

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### Reference numbers

- 101: GTP initiator / network element (according to prior art)
- 102: GTP responder / peer (according to prior art)
- 200: GTP initiator / network element / network function / network device
- 201: echo manager / EM
- 202: queue processor
- 203: GTP responder / peer
- 204: database / peer information database
- 205: processing queue
- 207: processing event sender
- 208: echo notification / poll receiver
- 209: EM selector
- 210: peer selector
- 211: queue database
- 212: processing event generator
- 213: process event message
- 214: event notification / notification from EM / echo notification
- 215: processing event receiver
- 216: echo notification / poll sender
- 217: peer status determinator
- 218: time delay determinator
- 219: echo notification generator and queue poller
- 220: database update message / peer information update message
- 221: database entry / peer information database entry
- 222: queue database
- 223: load balancer
- S1-S8: Method steps carried out by queue processor
- S9-S19: Method steps carried out by echo manager

## Claims

1. A method for handling echo requests/responses at a network element (200), wherein the method comprises performing, by a first echo manager (201) of a plurality of echo managers (201):
receiving (S9) a process event message (213) from a queue processor (202), wherein the process event message (213) indicates a peer (203) to be processed,
in response to receiving (S9) the process event message (213) from the queue processor (202), retrieving (S10) from a database (204) peer information including a reachability status indicator of the peer (203) indicated in the process event message (213),
based on the retrieved peer information determining (S11, S13) (a) whether an echo request is to be sent to the peer (203) indicated in the process event message (213), and (b) a time interval after which a next process event message (213) which indicates the peer (203) is to be sent, and
generating (S18) an event notification (214) indicating the determined time interval and the associated peer (203), and sending (S14) the generated event notification (214) to the queue processor (202);
wherein the method further comprises performing, by the queue processor (202):
updating (S3) a processing queue (205) with an entry including the time interval and associated peer (203) indicated in the event notification (214) received from the first echo manager (201), wherein the processing queue (205) is configured to comprise entries including time interval and associated peer (203) indicated in event notifications (214) received from one or more echo managers (201) of the plurality of echo managers (201); and
sending (S7) a process event message (213) to a selected echo manager (201), wherein the process event message (213) indicates a peer (203) to be processed, said peer (203) being identified by the queue processor (202) based on a time interval associated with the peer (203) as stored in the queue entry.

2. The method of claim 1, further comprising in response to receiving (S19) an echo response from a peer (203), updating (S12) in the database (204), by an echo manager (201) of the plurality of echo managers (201), peer information relative to the peer (203), wherein updating (S12) the peer information includes setting the reachability status indicator to indicate that the network element (200) received an echo response from the peer (203).

3. The method of claim 1 or 2, further comprising, in case the first echo manager (201) determines (S11) from the retrieved (S10) peer information that the peer (203) sent an echo response message, updating (S12) in the database (204), by the first echo manager (201) of the plurality of echo managers (201), peer information relative to the peer (203), wherein updating (S12) the peer information includes resetting the reachability status indicator.

4. The method of claim 1 or 2, further comprising performing, by the first echo manger (201):
in case the peer information indicates that the peer (203) has not sent an echo response, sending (S14, S17) an echo request to the peer (203) indicated in the process event message (213), and a notification (S3) to the queue processor (202) indicating a short time interval related to the peer (203); or
in case the peer information indicates that the peer (203) has sent an echo response, sending (S14) an event notification (214) to the queue processor (202) indicating a long time interval related to the peer (203) and resetting (S12) in the database (204) the peer information with respect to the peer (203).

5. The method of any of the preceding claims, further comprising:
subsequent to sending (S14) a notification (214) to the queue processor (202), sending (S15) to the queue processor (202), by the first echo manager (201), a polling request to indicate availability to receive a new process event message (213).

6. The method of claim 5, further comprising in response to the polling request, updating, by the queue processor (202), a queue of echo managers, EM-queue, with a queue element corresponding to the echo manager (201) sending the polling message.

7. The method of any of the preceding claims, wherein the reachability status indicator in the peer information is an echo response flag including an echo response counter, the method further comprising, in case the peer (203) has sent an echo response message, updating, by an echo manager (201), the peer information with respect to the peer (203) by increasing the response counter by one or by setting the echo response counter to 1.

8. The method of claim 1 further including, after sending (S7) the process event message (213) to the echo manager (201), flagging (S8), by the queue processor (202), the entry of the queue relating to the peer (203) indicated in the process event message (213) as 'do not send' to avoid duplicated process event messages (213), and removing, by the queue processor (202), the entry in response to receiving an event notification (214) or a clean-up instruction from the echo manager (201).

9. A method for handling echo requests/responses by an echo manager (201) of a plurality of echo managers (201), the plurality of echo managers (201) configured to be implemented in a network element (200), the method comprising:
receiving (S9) a process event message (213) from a queue processor (202), wherein the process event message (213) indicates a peer (203) to be processed;
in response to receiving (S9) the process event message (213) from the queue processor (202), retrieving (S10) from a database (204) peer information including a reachability status indicator of the peer (203) indicated in the process event message (213), the peer information being stored in the database (204) and provided to an echo manager (201) of the plurality of echo managers (201);
based on the retrieved peer information determining (S11, S13) (a) whether an echo request is to be sent to the peer (203) indicated in the process event message (213), and (b) a time interval after which a next process event message (213) which indicates the peer (203) is to be sent; and
generating (S18) an event notification (214) indicating the determined time interval and the associated peer (203) and sending (S14) the generated event notification (214) to the queue processor (202).

10. A method for handling echo requests/responses by a queue processor (202) configured to be implemented in a network element (200), the method comprising:
receiving (S1) an event notification (214) from an echo manager (201) of a plurality of echo managers (201), the event notification (214) indicating a peer (203), and the event notification (214) indicating a determined time interval after which a next process event message (213) which indicates the peer (203) is to be sent;
updating (S3) a processing queue (205) with an entry including the time interval and the associated peer (203) indicated in the received event notification (214), wherein the processing queue (205) is configured to comprise entries including time interval and associated peer (203) indicated in event notifications (214) received from one or more echo managers (201) of the plurality of echo managers (201);
selecting (S5) an echo manager (201) from the plurality of echo managers (201) to which a process event message (213) is to be sent next, wherein the selected echo manager (201) corresponds to the next element in a queue of echo managers; and
sending (S7) a process event message (213) to the selected echo manager (201), wherein the process event message (213) indicates a peer (203) to be processed, said peer (203) being identified by the queue processor (202) based on a time interval associated with the peer (203) as stored in the processing queue entry.

11. An echo manager (201) of a plurality of echo managers for handling echo requests/responses, the echo manager configured to be implemented in a network element (200), wherein the echo manager is configured to:
receive (S9) a process event message (213) from a queue processor (202), wherein the process event message (213) indicates a peer (203) to be processed;
in response to receiving (S9) the process event message (213) from the queue processor (202), retrieve (S10) from a database (204) peer information including a reachability status indicator of the peer (203) indicated in the process event message (213), the peer information being stored in the database (204) and provided to an echo manager (201) of the plurality of echo managers (201);
based on the retrieved peer information determine (S11, S13) (a) whether an echo request is to be sent to the peer (203) indicated in the process event message (213), and (b) a time interval after which a next process event message (213) which indicates the peer (203) is to be sent; and
generate (S18) an event notification (214) indicating the determined time interval and the associated peer (203) and sending (S14) the generated event notification (214) to the queue processor (202).

12. A queue processor (202) for handling echo requests/responses configured to be implemented in a network element (200), and configured to:
receive (S1) an event notification (214) from an echo manager (201) of a plurality of echo managers (201), the event notification (214) indicating a peer (203), and the event notification (214) indicating a determined time interval after which a next process event message (213) which indicates the peer (203) is to be sent,;
update (S3) a processing queue (205) with an entry including the time interval and the associated peer (203) indicated in the received event notification (214), wherein the processing queue (205) is configured to comprise entries including time interval and associated peer (203) indicated in event notifications (214) received from one or more echo managers (201) of the plurality of echo managers (201);
select (S5) an echo manager (201) from the plurality of echo managers (201) to which a process event message (213) is to be sent next, wherein the selected echo manager (201) corresponds to the next element in a queue of echo managers; and
send (S7) a process event message (213) to the selected echo manager (201), wherein the process event message (213) indicates a peer (203) to be processed, said peer (203) being identified by the queue processor (202) based on a time interval associated with the peer (203) as stored in the processing queue entry.

13. A network device (200) comprising a plurality of echo managers and a queue processor, wherein
a first echo manager (201) of the plurality of echo managers (201) is configured to receive (S9), from the queue processor (202), a process event message (213) indicating a peer (203) to be processed, the first echo manager (201) being further configured to:
in response to receiving (S9) the process event message (213) from the queue processor (202), retrieve (S10) from a database (204) peer information relating the peer (203) indicated in the process event message (213);
based on the retrieved peer information determining (S11, S13) (a) whether an echo request is to be sent to the peer (203) indicated in the process event message (213), and (b) a time interval after which a next process event message (213) which indicates the peer (203) is to be sent; and
generating (S18) an event notification (214) indicating the determined time interval and the associated peer (203), and sending (S14) the generated event notification (214) to a queue processor (202);
wherein the queue processor (202) is configured to:
update (S3) a processing queue (205) with an entry including the time interval and associated peer (203) indicated in the event notification (214) received (S1) from the first echo manager (201), wherein the processing queue (205) is configured to comprise entries including time interval and associated peer (203) indicated in event notifications (214) received (S1) from one or more echo managers (201) of the plurality of echo managers (201); and
send (S7), upon expiry of the time interval indicated by the processing queue (205) associated with a peer (203), a processing event message (213) to an echo manager (201) that corresponds to the next element in a queue of echo managers, wherein the process event message (213) indicates the peer (203) associated with the time interval which is to be processed next, said peer (203) being identified by the queue processor (202) based on a time interval associated with the peer (203) as stored in the queue entry.

14. The device of claim 13, wherein the queue processor (202) further comprises an echo manager selector (209) that selects (S5) an echo manager (201) to which the next process event message (213) is sent (S7) based on a queue of echo managers stored in a database.

15. Computer program product comprising instructions which, when the computer program is executed by a processor, cause the computer to perform the method according to any of claims 1 to 10.

## Patentansprüche

1. Verfahren zum Handhaben von Echo-Anfragen/-antworten an einem Netzwerkelement (200), wobei das Verfahren das Durchführen, durch einen ersten Echo-Manager (201) von einer Vielzahl von Echo-Managern (201) umfasst:
Empfangen (S9) einer Prozess-Ereignisnachricht (213) von einem Warteschlangenprozessor (202), wobei die Prozess-Ereignisnachricht (213) einen zu verarbeitenden Peer (203) anzeigt,
als Reaktion auf das Empfangen (S9) der Prozess-Ereignisnachricht (213) von dem Warteschlangenprozessor (202), Abrufen (S10) aus einer Datenbank (204) von Peer-Informationen, einschließlich eines Erreichbarkeitsstatusindikators des Peers (203), der in der Prozess-Ereignisnachricht (213) angezeigt ist,
auf der Grundlage der abgerufenen Peer-Informationen, Bestimmen (S11, S13), (a) ob eine Echo-Anfrage an den in der Prozess-Ereignisnachricht (213) angezeigten Peer (203) gesendet werden soll, und (b) eines Zeitintervalls, nach dem eine nächste Prozess-Ereignisnachricht (213), die den Peer (203) anzeigt, gesendet werden soll, und
Erzeugen (S18) einer Ereignisbenachrichtigung (214), die das bestimmte Zeitintervall und den assoziierten Peer (203) anzeigt, und Senden (S14) der erzeugten Ereignisbenachrichtigung (214) an den Warteschlangenprozessor (202);
wobei das Verfahren ferner das Durchführen durch den Warteschlangenprozessor (202) umfasst:
Aktualisieren (S3) einer Verarbeitungswarteschlange (205) mit einem Eintrag, der das Zeitintervall und den assoziierten Peer (203) beinhaltet, die in der Ereignisbenachrichtigung (214) angezeigt sind, die von dem ersten Echo-Manager (201) empfangen wird, wobei die Verarbeitungswarteschlange (205) konfiguriert ist, um Einträge zu umfassen, die das Zeitintervall und den assoziierten Peer (203) beinhalten, die in Ereignisbenachrichtigungen (214) angezeigt sind, die von einem oder mehreren Echo-Managern (201) der Vielzahl von Echo-Managern (201) empfangen werden; und
Senden (S7) einer Prozess-Ereignisnachricht (213) an einen ausgewählten Echo-Manager (201), wobei die Prozess-Ereignisnachricht (213) einen zu verarbeitenden Peer (203) anzeigt, wobei der Peer (203) durch den Warteschlangenprozessor (202) auf der Grundlage von einem Zeitintervall identifiziert wird, das mit dem Peer (203) assoziiert ist, wie in dem Warteschlangeneintrag gespeichert.

2. Verfahren nach Anspruch 1, ferner umfassend als Reaktion auf das Empfangen (S19) einer Echo-Antwort von einem Peer (203), das Aktualisieren (S12) von Peer-Informationen relativ zum Peer (203) in der Datenbank (204) durch einen Echo-Manager (201) der Vielzahl von Echo-Managern (201), wobei das Aktualisieren (S12) der Peer-Informationen das Setzen des Erreichbarkeitsstatusindikators beinhaltet, um anzuzeigen, dass das Netzwerkelement (200) eine Echo-Antwort von dem Peer (203) empfangen hat.

3. Verfahren nach Anspruch 1 oder 2, ferner umfassend, falls der erste Echo-Manager (201) aus den abgerufenen (S10) Peer-Informationen bestimmt (S11), dass der Peer (203) eine Echo-Antwortnachricht gesendet hat, Aktualisieren (S12) von Peer-Informationen relativ zum Peer (203) in der Datenbank (204) durch den ersten Echo-Manager (201) der Vielzahl von Echo-Managern (201), wobei das Aktualisieren (S12) der Peer-Informationen das Zurücksetzen des Erreichbarkeitsstatusindikators beinhaltet.

4. Verfahren nach Anspruch 1 oder 2, ferner umfassend das Durchführen, durch den ersten Echo-Manager (201):
falls die Peer-Informationen anzeigen, dass der Peer (203) keine Echo-Antwort gesendet hat, Senden (S14, S17) einer Echo-Anfrage an den Peer (203), der in der Prozess-Ereignisnachricht (213) angezeigt ist, und einer Benachrichtigung (S3) an den Warteschlangenprozessor (202), die ein kurzes Zeitintervall bezogen auf den Peer (203) anzeigt; oder
falls die Peer-Informationen anzeigen, dass der Peer (203) eine Echo-Antwort gesendet hat, Senden (S14) einer Ereignisbenachrichtigung (214) an den Warteschlangenprozessor (202), die ein langes Zeitintervall bezogen auf den Peer (203) anzeigt, und Zurücksetzen (S12) der Peer-Informationen in Bezug auf den Peer (203) in der Datenbank (204).

5. Verfahren nach einem der vorhergehenden Ansprüche, ferner umfassend:
nach dem Senden (S14) einer Benachrichtigung (214) an den Warteschlangenprozessor (202), Senden (S15) einer Abfrageanforderung an den Warteschlangenprozessor (202) durch den ersten Echo-Manager (201), um die Verfügbarkeit zum Empfangen einer neuen Prozess-Ereignisnachricht (213) anzuzeigen.

6. Verfahren nach Anspruch 5, ferner umfassend, als Reaktion auf die Abfrageanforderung, das Aktualisieren, durch den Warteschlangenprozessor (202), einer Warteschlange von Echo-Managern, EM-Warteschlange, mit einem Warteschlangenelement, das dem Echo-Manager (201) entspricht, der die Abfragenachricht sendet.

7. Verfahren nach einem der vorhergehenden Ansprüche, wobei der Erreichbarkeitsstatusindikator in den Peer-Informationen ein Echo-Antwort-Flag ist, das einen Echo-Antwort-Zähler enthält, wobei das Verfahren ferner, falls der Peer (203) eine Echo-Antwort-Nachricht gesendet hat, das Aktualisieren, durch einen Echo-Manager (201), der Peer-Informationen in Bezug auf den Peer (203) durch Erhöhen des Antwort-Zählers um eins oder durch Setzen des Echo-Antwort-Zählers auf 1 umfasst.

8. Verfahren nach Anspruch 1, ferner beinhaltend, nach dem Senden (S7) der Prozess-Ereignisnachricht (213) an den Echo-Manager (201), das Markieren (S8), durch den Warteschlangenprozessor (202), des Eintrags der Warteschlange bezogen auf den Peer (203), der in der Prozess-Ereignisnachricht (213) angezeigt ist, als "nicht senden" um doppelte Prozess-Ereignisnachrichten (213) zu vermeiden, und das Entfernen, durch den Warteschlangenprozessor (202), des Eintrags als Reaktion auf das Empfangen einer Ereignisbenachrichtigung (214) oder einer Bereinigungsanweisung von dem Echo-Manager (201).

9. Verfahren zum Handhaben von Echo-Anfragen/-antworten durch einen Echo-Manager (201) einer Vielzahl von Echo-Managern (201), wobei die Vielzahl von Echo-Managern (201) konfiguriert ist, um in einem Netzwerkelement (200) implementiert zu werden, wobei das Verfahren Folgendes umfasst:
Empfangen (S9) einer Prozess-Ereignisnachricht (213) von einem Warteschlangenprozessor (202), wobei die Prozess-Ereignisnachricht (213) einen zu verarbeitenden Peer (203) anzeigt;
als Reaktion auf das Empfangen (S9) der Prozess-Ereignisnachricht (213) von dem Warteschlangenprozessor (202), Abrufen (S10) aus einer Datenbank (204) von Peer-Informationen, einschließlich eines Erreichbarkeitsstatusindikators des Peers (203), der in der Prozess-Ereignisnachricht (213) angezeigt ist, wobei die Peer-Informationen in der Datenbank (204) gespeichert und einem Echo-Manager (201) der Vielzahl von Echo-Managern (201) bereitgestellt werden;
auf der Grundlage der abgerufenen Peer-Informationen, Bestimmen (S11, S13), (a) ob eine Echo-Anfrage an den in der Prozess-Ereignisnachricht (213) angezeigten Peer (203) gesendet werden soll, und (b) eines Zeitintervalls, nach dem eine nächste Prozess-Ereignisnachricht (213), die den Peer (203) anzeigt, gesendet werden soll; und
Erzeugen (S18) einer Ereignisbenachrichtigung (214), die das bestimmte Zeitintervall und den assoziierten Peer (203) anzeigt, und Senden (S14) der erzeugten Ereignisbenachrichtigung (214) an den Warteschlangenprozessor (202).

10. Verfahren zum Handhaben von Echo-Anfragen/-antworten durch einen Warteschlangenprozessor (202), der konfiguriert ist, um in einem Netzwerkelement (200) implementiert zu werden, wobei das Verfahren umfasst:
Empfangen (S1) einer Ereignisbenachrichtigung (214) von einem Echo-Manager (201) einer Vielzahl von Echo-Managern (201), wobei die Ereignisbenachrichtigung (214) einen Peer (203) anzeigt und die Ereignisbenachrichtigung (214) ein bestimmtes Zeitintervall anzeigt, nach dem eine nächste Prozess-Ereignisnachricht (213) gesendet werden soll, die den Peer (203) anzeigt;
Aktualisieren (S3) einer Verarbeitungswarteschlange (205) mit einem Eintrag, der das Zeitintervall und den assoziierten Peer (203) beinhaltet, die in der empfangenen Ereignisbenachrichtigung (214) angezeigt sind, wobei die Verarbeitungswarteschlange (205) konfiguriert ist, um Einträge zu umfassen, die das Zeitintervall und den assoziierten Peer (203) beinhalten, die in Ereignisbenachrichtigungen (214) angezeigt sind, die von einem oder mehreren Echo-Managern (201) der Vielzahl von Echo-Managern (201) empfangen werden;
Auswählen (S5) eines Echo-Managers (201) aus der Vielzahl von Echo-Managern (201), an den als Nächstes eine Prozess-Ereignisnachricht (213) gesendet werden soll, wobei der ausgewählte Echo-Manager (201) dem nächsten Element in einer Warteschlange von Echo-Managern entspricht; und
Senden (S7) einer Prozess-Ereignisnachricht (213) an den ausgewählten Echo-Manager (201), wobei die Prozess-Ereignisnachricht (213) einen zu verarbeitenden Peer (203) anzeigt, wobei der Peer (203) durch den Warteschlangenprozessor (202) auf der Grundlage von einem Zeitintervall identifiziert wird, das mit dem Peer (203) assoziiert ist, wie in dem Warteschlangeneintrag gespeichert.

11. Echo-Manager (201) einer Vielzahl von Echo-Managern zum Handhaben von Echo-Anfragen/-antworten, wobei der Echo-Manager konfiguriert ist, um in einem Netzwerkelement (200) implementiert zu werden, wobei der Echo-Manager zu Folgendem konfiguriert ist:
Empfangen (S9) einer Prozess-Ereignisnachricht (213) von einem Warteschlangenprozessor (202), wobei die Prozess-Ereignisnachricht (213) einen zu verarbeitenden Peer (203) anzeigt;
als Reaktion auf das Empfangen (S9) der Prozess-Ereignisnachricht (213) von dem Warteschlangenprozessor (202), Abrufen (S10) aus einer Datenbank (204) von Peer-Informationen, einschließlich eines Erreichbarkeitsstatusindikators des Peers (203), der in der Prozess-Ereignisnachricht (213) angezeigt ist, wobei die Peer-Informationen in der Datenbank (204) gespeichert und einem Echo-Manager (201) der Vielzahl von Echo-Managern (201) bereitgestellt werden;
auf der Grundlage der abgerufenen Peer-Informationen, Bestimmen (S11, S13), (a) ob eine Echo-Anfrage an den in der Prozess-Ereignisnachricht (213) angezeigten Peer (203) gesendet werden soll, und (b) eines Zeitintervalls, nach dem eine nächste Prozess-Ereignisnachricht (213), die den Peer (203) anzeigt, gesendet werden soll; und
Erzeugen (S18) einer Ereignisbenachrichtigung (214), die das bestimmte Zeitintervall und den assoziierten Peer (203) anzeigt, und Senden (S14) der erzeugten Ereignisbenachrichtigung (214) an den Warteschlangenprozessor (202).

12. Warteschlangenprozessor (202) zum Handhaben von Echo-Anfragen/-antworten, der konfiguriert ist, um in einem Netzwerkelement (200) implementiert zu werden, und zu Folgendem konfiguriert ist:
Empfangen (S1) einer Ereignisbenachrichtigung (214) von einem Echo-Manager (201) einer Vielzahl von Echo-Managern (201), wobei die Ereignisbenachrichtigung (214) einen Peer (203) anzeigt und die Ereignisbenachrichtigung (214) ein bestimmtes Zeitintervall anzeigt, nach dem eine nächste Prozess-Ereignisnachricht (213) gesendet werden soll, die den Peer (203) anzeigt;
Aktualisieren (S3) einer Verarbeitungswarteschlange (205) mit einem Eintrag, der das Zeitintervall und den assoziierten Peer (203) beinhaltet, die in der empfangenen Ereignisbenachrichtigung (214) angezeigt sind, wobei die Verarbeitungswarteschlange (205) konfiguriert ist, um Einträge zu umfassen, die das Zeitintervall und den assoziierten Peer (203) beinhalten, die in Ereignisbenachrichtigungen (214) angezeigt sind, die von einem oder mehreren Echo-Managern (201) der Vielzahl von Echo-Managern (201) empfangen werden;
Auswählen (S5) eines Echo-Managers (201) aus der Vielzahl von Echo-Managern (201), an den als Nächstes eine Prozess-Ereignisnachricht (213) gesendet werden soll, wobei der ausgewählte Echo-Manager (201) dem nächsten Element in einer Warteschlange von Echo-Managern entspricht; und
Senden (S7) einer Prozess-Ereignisnachricht (213) an den ausgewählten Echo-Manager (201), wobei die Prozess-Ereignisnachricht (213) einen zu verarbeitenden Peer (203) anzeigt, wobei der Peer (203) durch den Warteschlangenprozessor (202) auf der Grundlage von einem Zeitintervall identifiziert wird, das mit dem Peer (203) assoziiert ist, wie in dem Warteschlangeneintrag gespeichert.

13. Netzwerkvorrichtung (200), die eine Vielzahl von Echo-Managern und einen Warteschlangenprozessor umfasst, wobei
ein erster Echo-Manager (201) der Vielzahl von Echo-Managern (201) konfiguriert ist, um von dem Warteschlangenprozessor (202) eine Prozess-Ereignisnachricht (213) zu empfangen (S9), die einen zu verarbeitenden Peer (203) anzeigt, wobei der erste Echo-Manager (201) ferner zu Folgendem konfiguriert ist:
als Reaktion auf das Empfangen (S9) der Prozess-Ereignisnachricht (213) von dem Warteschlangenprozessor (202), Abrufen (S10) aus einer Datenbank (204) von Peer-Informationen bezogen auf den Peer (203), der in der Prozess-Ereignisnachricht (213) angezeigt ist;
auf der Grundlage der abgerufenen Peer-Informationen, Bestimmen (S11, S13), (a) ob eine Echo-Anfrage an den in der Prozess-Ereignisnachricht (213) angezeigten Peer (203) gesendet werden soll, und (b) eines Zeitintervalls, nach dem eine nächste Prozess-Ereignisnachricht (213), die den Peer (203) anzeigt, gesendet werden soll; und
Erzeugen (S18) einer Ereignisbenachrichtigung (214), die das bestimmte Zeitintervall und den assoziierten Peer (203) anzeigt, und Senden (S14) der erzeugten Ereignisbenachrichtigung (214) an einen Warteschlangenprozessor (202).
wobei der Warteschlangenprozessor (202) zu Folgendem konfiguriert ist:
Aktualisieren (S3) einer Verarbeitungswarteschlange (205) mit einem Eintrag, der das Zeitintervall und den assoziierten Peer (203) beinhaltet, die in der Ereignisbenachrichtigung (214) angezeigt sind, die von dem ersten Echo-Manager (201) empfangen (S1) wird, wobei die Verarbeitungswarteschlange (205) konfiguriert ist, um Einträge zu umfassen, die das Zeitintervall und den assoziierten Peer (203) beinhalten, die in Ereignisbenachrichtigungen (214) angezeigt sind, die von einem oder mehreren Echo-Managern (201) der Vielzahl von Echo-Managern (201) empfangen (S1) werden; und
Senden (S7) einer Verarbeitungsereignisnachricht (213) an einen Echo-Manager (201), der dem nächsten Element in einer Warteschlange von Echo-Managern entspricht, nach Ablauf des Zeitintervalls, das von der Verarbeitungswarteschlange (205) angezeigt wird, die mit einem Peer (203) assoziiert ist, wobei die Prozess-Ereignisnachricht (213) den mit dem Zeitintervall assoziierten Peer (203) anzeigt, der als Nächstes verarbeitet werden soll, wobei der Peer (203) durch den Warteschlangenprozessor (202) auf der Grundlage eines Zeitintervalls identifiziert wird, das mit dem Peer (203) assoziiert ist, wie es in dem Warteschlangeneintrag gespeichert ist.

14. Vorrichtung nach Anspruch 13, wobei der Warteschlangenprozessor (202) ferner einen Echo-Manager-Auswähler (209) umfasst, der einen Echo-Manager (201) auswählt (S5), an den die nächste Prozess-Ereignisnachricht (213) gesendet wird (S7), auf der Grundlage von einer Warteschlange von Echo-Managern, die in einer Datenbank gespeichert sind.

15. Computerprogrammprodukt, umfassend Anweisungen, die, wenn das Computerprogramm durch einen Prozessor ausgeführt wird, den Computer veranlassen, das Verfahren nach einem der Ansprüche 1 bis 10 durchzuführen.

## Revendications

1. Procédé de gestion des requêtes et réponses d'écho au niveau d'un élément de réseau (200), dans lequel le procédé comprend l'exécution, par un premier gestionnaire d'écho (201) parmi une pluralité de gestionnaires d'écho (201), des opérations suivantes :
recevoir (S9) un message d'événement de traitement (213) provenant d'un processeur de file d'attente (202), le message d'événement de traitement (213) indiquant un homologue (203) à traiter,
en réponse à la réception (S9) du message d'événement de traitement (213) provenant du processeur de file d'attente (202), récupérer (S10) à partir d'une base de données (204) des informations relatives à l'homologue, y compris un indicateur d'état d'accessibilité de l'homologue (203) indiqué dans le message d'événement de traitement (213),
en fonction des informations récupérées relatives à l'homologue, déterminer (S11, S13) (a) s'il convient d'envoyer une requête d'écho à l'homologue (203) indiqué dans le message d'événement de traitement (213), et (b) un intervalle de temps au terme duquel un prochain message d'événement de traitement (213) indiquant l'homologue (203) doit être envoyé, et
générer (S18) une notification d'événement (214) indiquant l'intervalle de temps déterminé et l'homologue associé (203), et envoyer (S14) la notification d'événement générée (214) au processeur de file d'attente (202) ;
dans lequel le procédé comprend en outre l'exécution, par le processeur de file d'attente (202), des opérations suivantes :
mettre à jour (S3) une file d'attente de traitement (205) avec une entrée comprenant l'intervalle de temps et l'homologue associé (203) indiqués dans la notification d'événement (214) reçue du premier gestionnaire d'écho (201), la file d'attente de traitement (205) étant configurée pour comprendre des entrées comprenant l'intervalle de temps et l'homologue associé (203) indiqués dans les notifications d'événement (214) reçues d'un ou plusieurs gestionnaires d'écho (201) parmi la pluralité de gestionnaires d'écho (201) ; et
envoyer (S7) un message d'événement de traitement (213) à un gestionnaire d'écho sélectionné (201), le message d'événement de traitement (213) indiquant un homologue (203) à traiter, ledit homologue (203) étant identifié par le processeur de file d'attente (202) sur la base d'un intervalle de temps associé à l'homologue (203) tel qu'il est stocké dans l'entrée de file d'attente.

2. Procédé selon la revendication 1, comprenant en outre, en réponse à la réception (S19) d'une réponse d'écho provenant d'un homologue (203), la mise à jour (S12) dans la base de données (204), par un gestionnaire d'écho (201) parmi la pluralité de gestionnaires d'écho (201), des informations relatives à l'homologue (203), la mise à jour (S12) des informations relatives à l'homologue comprenant la définition de l'indicateur d'état d'accessibilité de manière à indiquer que l'élément de réseau (200) a reçu une réponse d'écho provenant de l'homologue (203).

3. Procédé selon la revendication 1 ou 2, comprenant en outre, dans le cas où le premier gestionnaire d'écho (201) détermine (S11), à partir des informations relatives à l'homologue récupérées (S10), que l'homologue (203) a envoyé un message de réponse d'écho, la mise à jour (S12) dans la base de données (204), par le premier gestionnaire d'écho (201) parmi la pluralité de gestionnaires d'écho (201), des informations relatives à l'homologue (203), la mise à jour (S12) des informations relatives à l'homologue comprenant la réinitialisation de l'indicateur d'état d'accessibilité.

4. Procédé selon la revendication 1 ou 2, comprenant en outre l'exécution, par le premier gestionnaire d'écho (201), des opérations suivantes :
si les informations relatives à l'homologue indiquent que l'homologue (203) n'a pas envoyé de réponse d'écho, envoyer (S14, S17) une requête d'écho à l'homologue (203) indiqué dans le message d'événement de traitement (213), ainsi qu'une notification (S3) au processeur de file d'attente (202) indiquant un court intervalle de temps lié à l'homologue (203) ; ou
si les informations relatives à l'homologue indiquent que l'homologue (203) a envoyé une réponse d'écho, envoyer (S14) une notification d'événement (214) au processeur de file d'attente (202) indiquant un long intervalle de temps relatif à l'homologue (203) et réinitialiser (S12) dans la base de données (204) les informations relatives à l'homologue (203).

5. Procédé selon l'une quelconque des revendications précédentes, comprenant en outre :
après avoir envoyé (S14) une notification (214) au processeur de file d'attente (202), le premier gestionnaire d'écho (201) envoie (S15) au processeur de file d'attente (202) une requête d'interrogation indiquant qu'il est prêt à recevoir un nouveau message d'événement de traitement (213).

6. Procédé selon la revendication 5, comprenant en outre, en réponse à la requête d'interrogation, la mise à jour, par le processeur de file d'attente (202), d'une file d'attente de gestionnaires d'écho EM-file d'attente, avec un élément de file d'attente correspondant au gestionnaire d'écho (201) qui envoie le message d'interrogation.

7. Procédé selon l'une quelconque des revendications précédentes, dans lequel l'indicateur d'état d'accessibilité figurant dans les informations relatives à l'homologue est un indicateur de réponse d'écho comprenant un compteur de réponses d'écho, le procédé comprenant en outre, dans le cas où l'homologue (203) a envoyé un message de réponse d'écho, la mise à jour, par un gestionnaire d'écho (201), des informations relatives à l'homologue (203) en incrémentant le compteur de réponses d'écho d'une unité ou en définissant le compteur de réponses d'écho à 1.

8. Procédé selon la revendication 1, comprenant en outre, après l'envoi (S7) du message d'événement de traitement (213) au gestionnaire d'écho (201), le signalement (S8), par le processeur de file d'attente (202), de l'entrée de la file d'attente relative à l'homologue (203) indiqué dans le message d'événement de traitement (213) comme « ne pas envoyer » afin d'éviter la duplication des messages d'événement de traitement (213), et la suppression, par le processeur de file d'attente (202), de l'entrée en réponse à la réception d'une notification d'événement (214) ou d'une instruction de nettoyage provenant du gestionnaire d'écho (201).

9. Procédé de traitement des requêtes et réponses d'écho par un gestionnaire d'écho (201) parmi une pluralité de gestionnaires d'écho (201), la pluralité de gestionnaires d'écho (201) étant configurée pour être mise en œuvre dans un élément de réseau (200), le procédé comprenant :
la réception (S9) d'un message d'événement de traitement (213) provenant d'un processeur de file d'attente (202), le message d'événement de traitement (213) indiquant un homologue (203) à traiter ;
en réponse à la réception (S9) du message d'événement de traitement (213) provenant du processeur de file d'attente (202), la récupération (S10) dans une base de données (204) des informations relatives à l'homologue, y compris un indicateur d'état d'accessibilité de l'homologue (203) indiqué dans le message d'événement de traitement (213), les informations relatives à l'homologue étant stockées dans la base de données (204) et fournies à un gestionnaire d'écho (201) parmi la pluralité de gestionnaires d'écho (201) ;
en fonction des informations récupérées relatives à l'homologue, la détermination (S11, S13) (a) s'il convient d'envoyer une requête d'écho à l'homologue (203) indiqué dans le message d'événement de traitement (213), et (b) un intervalle de temps au terme duquel un prochain message d'événement de traitement (213) indiquant l'homologue (203) doit être envoyé ; et
la génération (S18) d'une notification d'événement (214) indiquant l'intervalle de temps déterminé et l'homologue associé (203), et envoyer (S14) la notification d'événement générée (214) au processeur de file d'attente (202).

10. Procédé de traitement des requêtes et réponses d'écho par un processeur de file d'attente (202) configuré pour être mis en œuvre dans un élément de réseau (200), le procédé comprenant :
la réception (S1) d'une notification d'événement (214) provenant d'un gestionnaire d'écho (201) parmi une pluralité de gestionnaires d'écho (201), la notification d'événement (214) indiquant un homologue (203), et la notification d'événement (214) indiquant un intervalle de temps déterminé au terme duquel un prochain message d'événement de traitement (213), indiquant l'homologue (203), doit être envoyé ;
la mise à jour (S3) d'une file d'attente de traitement (205) avec une entrée comprenant l'intervalle de temps et l'homologue associé (203) indiqués dans la notification d'événement reçue (214), la file d'attente de traitement (205) est configurée pour comprendre des entrées comprenant l'intervalle de temps et l'homologue associé (203) indiqués dans les notifications d'événement (214) reçues d'un ou plusieurs gestionnaires d'écho (201) parmi la pluralité de gestionnaires d'écho (201) ;
la sélection (S5) d'un gestionnaire d'écho (201) parmi la pluralité de gestionnaires d'écho (201) auxquels un message d'événement de traitement (213) doit être envoyé ensuite, le gestionnaire d'écho sélectionné (201) correspondant à l'élément suivant dans une file d'attente de gestionnaires d'écho ; et
l'envoi (S7) d'un message d'événement de traitement (213) à un gestionnaire d'écho sélectionné (201), le message d'événement de traitement (213) indiquant un homologue (203) à traiter, ledit homologue (203) étant identifié par le processeur de file d'attente (202) sur la base d'un intervalle de temps associé à l'homologue (203) tel qu'il est stocké dans l'entrée de file d'attente.

11. Gestionnaire d'écho (201) parmi une pluralité de gestionnaires d'écho destinés à traiter les requêtes et réponses d'écho, le gestionnaire d'écho configuré pour être mis en œuvre dans un élément de réseau (200), dans lequel le gestionnaire d'écho est configuré pour :
recevoir (S9) un message d'événement de traitement (213) provenant d'un processeur de file d'attente (202), le message d'événement de traitement (213) indiquant un homologue (203) à traiter ;
en réponse à la réception (S9) du message d'événement de traitement (213) provenant du processeur de file d'attente (202), récupérer (S10) à partir d'une base de données (204) des informations relatives à l'homologue, y compris un indicateur d'état d'accessibilité de l'homologue (203) indiqué dans le message d'événement de traitement (213), les informations relatives à l'homologue étant stockées dans la base de données (204) et fournies à un gestionnaire d'écho (201) parmi la pluralité de gestionnaires d'écho (201) ;
en fonction des informations relatives à l'homologue récupérées, déterminer (S11, S13) (a) s'il convient d'envoyer une requête d'écho à l' homologue (203) indiqué dans le message d'événement de traitement (213), et (b) un intervalle de temps au terme duquel un prochain message d'événement de traitement (213) indiquant l'homologue (203) doit être envoyé ; et
générer (S18) une notification d'événement (214) indiquant l'intervalle de temps déterminé et l'homologue associé (203), et envoyer (S14) la notification d'événement générée (214) au processeur de file d'attente (202).

12. Processeur de file d'attente (202) destiné à traiter les requêtes et réponses d'écho, configuré pour être mis en œuvre dans un élément de réseau (200), et configuré pour :
recevoir (S1) une notification d'événement (214) provenant d'un gestionnaire d'écho (201) parmi une pluralité de gestionnaires d'écho (201), la notification d'événement (214) indiquant un homologue (203), et la notification d'événement (214) indiquant un intervalle de temps déterminé au terme duquel un prochain message d'événement de traitement (213), indiquant l'homologue (203), doit être envoyé ;
mettre à jour (S3) une file d'attente de traitement (205) avec une entrée comprenant l'intervalle de temps et l'homologue associé (203) indiqués dans la notification d'événement reçue (214), la file d'attente de traitement (205) étant configurée pour comprendre des entrées comprenant l'intervalle de temps et l'homologue associé (203) indiqués dans les notifications d'événement (214) reçues d'un ou plusieurs gestionnaires d'écho (201) parmi la pluralité de gestionnaires d'écho (201) ;
sélectionner (S5) un gestionnaire d'écho (201) parmi la pluralité de gestionnaires d'écho (201) auxquels un message d'événement de traitement (213) doit être envoyé ensuite, le gestionnaire d'écho sélectionné (201) correspondant à l'élément suivant dans une file d'attente de gestionnaires d'écho ; et
envoyer (S7) un message d'événement de traitement (213) à un gestionnaire d'écho sélectionné (201), le message d'événement de traitement (213) indiquant un homologue (203) à traiter, ledit homologue (203) étant identifié par le processeur de file d'attente (202) sur la base d'un intervalle de temps associé à l'homologue (203) tel qu'il est stocké dans l'entrée de file d'attente.

13. Dispositif de réseau (200) comprenant une pluralité de gestionnaires d'écho et un processeur de files d'attente, dans lequel
un premier gestionnaire d'écho (201) parmi la pluralité de gestionnaires d'écho (201) est configuré pour recevoir (S9), du processeur de file d'attente (202), un message d'événement de traitement (213) indiquant un homologue (203) à traiter, le premier gestionnaire d'écho (201) étant en outre configuré pour :
en réponse à la réception (S9) du message d'événement de traitement (213) provenant du processeur de file d'attente (202), extraire (S10) d'une base de données (204) les informations relatives à l'homologue (203) indiqué dans le message d'événement de traitement (213) ;
en fonction des informations récupérées relatives à l'homologue, la détermination (S11, S13) (a) s'il convient d'envoyer une requête d'écho à l'homologue (203) indiqué dans le message d'événement de traitement (213), et (b) un intervalle de temps au terme duquel un prochain message d'événement de traitement (213) indiquant l'homologue (203) doit être envoyé ; et
générer (S18) une notification d'événement (214) indiquant l'intervalle de temps déterminé et l'homologue associé (203), et envoyer (S14) la notification d'événement générée (214) à un processeur de file d'attente (202) ;
dans lequel le processeur de file d'attente (202) est configuré pour :
mettre à jour (S3) une file d'attente de traitement (205) avec une entrée comprenant l'intervalle de temps et l'homologue associé (203) indiqués dans la notification d'événement (214) reçue (S1) du premier gestionnaire d'écho (201), la file d'attente de traitement (205) étant configurée pour comprendre des entrées comprenant l'intervalle de temps et l'homologue associé (203) indiqués dans les notifications d'événement (214) reçues (S1) d'un ou plusieurs gestionnaires d'écho (201) parmi la pluralité de gestionnaires d'écho (201) ; et
envoyer (S7), à l'expiration de l'intervalle de temps indiqué par la file d'attente de traitement (205) associée à un homologue (203), un message d'événement de traitement (213) à un gestionnaire d'écho (201) qui correspond à l'élément suivant dans une file d'attente de gestionnaires d'écho, le message d'événement de traitement (213) indiquant l'homologue (203) associé à l'intervalle de temps qui doit être traité ensuite, ledit homologue (203) étant identifié par le processeur de file d'attente (202) sur la base d'un intervalle de temps associé à l'homologue (203) tel qu'il est stocké dans l'entrée de file d'attente.

14. Dispositif selon la revendication 13, dans lequel le processeur de file d'attente (202) comprend en outre un sélecteur de gestionnaires d'écho (209) qui sélectionne (S5) un gestionnaire d'écho (201) auquel le prochain message d'événement de traitement (213) est envoyé (S7), sur la base d'une file d'attente de gestionnaires d'écho stockée dans une base de données.

15. Produit logiciel comprenant des instructions qui, lorsque le programme informatique est exécuté par un processeur, amènent l'ordinateur à mettre en œuvre le procédé selon l'une quelconque des revendications 1 à 10.
